(19) Europäisches Patentamt / European Patent Office / Office européen des brevets

(11) **EP 3 902 651 B1**

(12) **EUROPEAN PATENT SPECIFICATION**

(45) Date of publication and mention of the grant of the patent:
**27.08.2025 Bulletin 2025/35**

(21) Application number: **19835826.9**

(22) Date of filing: **24.12.2019**

(51) International Patent Classification (IPC):
**B23K 26/26** (2014.01)          **B23K 26/322** (2014.01)
**B23K 31/02** (2006.01)          **B23K 26/211** (2014.01)
**B23K 101/00** (2006.01)        **B23K 101/18** (2006.01)
**B23K 101/34** (2006.01)        **B23K 103/04** (2006.01)

(52) Cooperative Patent Classification (CPC):
**B23K 26/26; B23K 26/322;** B23K 2101/34;
B23K 2103/04

(86) International application number:
**PCT/IB2019/061344**

(87) International publication number:
**WO 2020/136585 (02.07.2020 Gazette 2020/27)**

(54) **METHOD FOR PRODUCING A WELDED STEEL BLANK AND ASSOCIATED WELDED STEEL BLANK**

VERFAHREN ZUR HERSTELLUNG EINES GESCHWEISSTEN STAHLBLECHS UND EIN GESCHWEISSTES STAHLBLECH

PROCÉDÉ DE PRODUCTION D'UNE TÔLE D'ACIER SOUDÉE ET TÔLE D'ACIER SOUDÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **24.12.2018 PCT/IB2018/060585**

(43) Date of publication of application:
**03.11.2021 Bulletin 2021/44**

(60) Divisional application:
**25186990.5 / 4 606 512**

(73) Proprietor: **ArcelorMittal**
**1160 Luxembourg (LU)**

(72) Inventors:
• **SCHMIT, Francis**
  **51140 Bouvancourt (FR)**
• **POIRIER, Maria**
  **60800 Villers-Saint-Paul (FR)**
• **ALVAREZ, Cristian**
  **60761 Montataire Cedex (FR)**
• **GOUTON, Lucille**
  **33460 Arsac (FR)**
• **DAVID, Thierry**
  **60600 Clermont (FR)**
• **VIAUX, Ivan**
  **75018 Paris (FR)**

(74) Representative: **Lavoix**
**2, place d'Estienne d'Orves**
**75441 Paris Cedex 09 (FR)**

(56) References cited:
**EP-A- 2 737 971          WO-A1-2015/150892**
**DE-A- 102015 115 915    KR-A- 20160 033 541**
**US-A1- 2014 003 860**

• **WENHU ET. AL.: "Effect of filler wire on laser welded blanks of Al-Si-coated 22MnB5 steel - ScienceDirect", 30 September 2018 (2018-09-30), XP055683552, Retrieved from the Internet <URL:https://www.sciencedirect.com/science/article/pii/S0924013618301882> [retrieved on 20200407]**

**Description**

The present invention relates to a method for producing a welded steel blank, to the thus obtained welded steel blank, to a method for producing a welded, hot press-formed and cooled steel part from the welded steel blank and to the thus obtained welded, hot press-formed and cooled steel part, according to the preamble of claims 1, 15, 17 and 27.

Methods for the fabrication of welded parts from steel sheets of different compositions and/or thicknesses that are butt-welded to one another are known from the prior art. More particularly, the welded blanks are usually heated to a temperature allowing the austenitization of the steel and are then hot-formed and cooled in the hot-press forming tool. The composition of the steel can be selected both to make subsequent heating and forming operations possible and to give the welded steel part high mechanical strength, high impact strength and good corrosion resistance.

Steel parts of this type are used in particular in the automobile industry, and more particularly for the fabrication of anti-intrusion parts, structural parts or parts that contribute to the safety of motor vehicles.

In order to prevent corrosion, the steel sheets are pre-coated with an aluminum-based precoating through hot-dip coating in an aluminum-containing bath. If the steel sheets are welded without any prior preparation, the aluminum-based precoating will be diluted with the steel substrate within the molten metal during the welding operation. In the range of aluminum contents of the precoating, two phenomena can then occur.

If the aluminum content in the molten metal is locally high, intermetallic compounds are formed in the weld joint, resulting from the dilution of a portion of the precoating in the molten metal and of the alloying which occurs during the subsequent heating of the weld joint before the hot forming step. These intermetallic compounds are sites where incipient cracking is most likely to occur.

Furthermore, the aluminum tends to increase the austenitization temperature (Ac3) of the weld joint, and this modification of the austenitic domain will be all the more important as the level of aluminum in the weld joint is high. In some cases, this may prevent the complete austenitization of the weld joint which should occur on heating prior to forming and is the first step required for hot stamping and obtaining a martensitic structure in the weld joint after hot-press forming and cooling.

Moreover, aluminum also has a detrimental effect on the quenchability of the weld joint, as it increases the critical cooling speed necessary to obtain martensitic or bainitic structures in the weld joint during cooling.

Consequently, it is no longer possible to obtain martensite or bainite during the cooling after the hot forming and the thus obtained weld joint will contain ferrite. The weld joint then exhibits a hardness and mechanical strength which are less than those of the two adjacent sheets and therefore constitutes the weakest area of the part.

Publication EP2007545 describes a solution which consists in removing the superficial layer of metallic alloy at the weld edge of the pre-coated steel sheets, which is intended to be incorporated at least partially into the weld metal zone. The removal can be performed by brushing or using a laser beam. The intermetallic alloy layer is preserved in order to guarantee the corrosion resistance and to prevent the phenomena of decarburization and oxidation during the heat treatment that precedes the forming operation. The effect of aluminum is, in this case, reduced by a local elimination of the superficial layer of the coating.

However, the inventors of the present patent application have observed that, even if the superficial layer of metallic alloy is removed at the weld edge of the pre-coated steel sheets, the weld joint may still have insufficient mechanical properties. Indeed, the aluminum concentration in the weld joint may still be too high, due to the presence of projections from the coating onto the side face of the steel sheet at the weld edge resulting from the removal operation and/or, for thin steel sheets having, for example, a thickness smaller than or equal to 1.0 mm.

EP 2 737 971, US 2016/0144456 and WO 2014075824 try to provide a method in which the precoated sheets are welded without prior removal of the precoating, using a filler wire comprising austenite-stabilizing elements, such as carbon, manganese or nickel, with the aim of obtaining a fully martensitic structure in the weld joint, after hot press-forming and cooling, despite the presence of aluminum in the weld resulting from the melting of the precoating.

These methods are, however, not entirely satisfactory since they only deal with one of the problems relating to the presence of aluminum in the weld pool: the compensation of the austenitization temperature (Ac3) and, in some cases, the use of high carbon filler wires can induce segregations in the weld joint. Indeed, the inventors of the present invention have found that the methods disclosed in the above-mentioned documents do not allow obtaining satisfactory mechanical properties in the parts obtained after hot press-forming and cooling, in particular for aluminum contents greater than or equal to 0.7% by weight in the weld joint. In particular, for such parts, there is a high risk of failure in the weld joint under tensile testing in the weld transverse direction.

The methods disclosed in WO 2015/086781 and EP 2 942 143 also deal with this issue and describe methods in which the precoated steel sheets are welded using particular welding methods with specific filler materials.

More particularly, WO 2015/086781 suggests using twin spot laser welding while supplying filler material in the form of a metal powder having the following composition, in weight percentage: C:0-0.03 wt.%, Mo: 2.0-3.0 wt.%, Ni: 10-14 wt.%, Mn: 1.0-2.0 wt.%, Cr: 16-18 wt.% and Si: 0.0-1..0 wt.%, the rest being iron.

EP 2 942 143 suggests using hybrid laser/arc welding using an arc welding torch positioned in front of the laser beam, while supplying filler material in the form of a filler wire having the following composition: C:0-0.3 wt.%, Mo: 0-0.4 wt.%, Ni: 6-20 wt.%, Mn: 0.5-7 wt.%, Cr: 5-22 wt.% and Si: 0-1.3 wt.%, Nb: 0-0.7 wt.%, the rest being iron.

These methods are also not satisfactory. Indeed, the inventors of the present invention have observed that the use of the filler wires described therein results in a high risk of failure of the part after hot press-forming and cooling in the zone immediately adjacent to the weld.

Furthermore, the use of hybrid laser-arc welding is not desirable, since hybrid laser/arc welding does not allow reaching the same welding speeds as laser welding and therefore results in a decreased overall productivity of the process.

Moreover, powder addition is generally more difficult to implement in a large-scale industrial setting than filler wires.

All of the methods based on filler material addition mentioned here-before only specify chemical composition ranges for the filler material, and, since the welding parameters and conditions have an influence on the filler material rate, one single filler wire can induce very different chemical compositions in the weld joint. The description of the composition of the filler wire alone therefore appears not to be sufficient to solve the aforementioned problems.

US 2014/003860 A1 describes a welded blank assembly formed by welding edge regions of separate sheet metal pieces together at a weld joint.

An object of the invention is therefore to provide a method for producing a welded steel blank from two such precoated sheets that allows obtaining, after hot press-forming and cooling, a part having satisfactory crash performance properties, even for relatively high aluminum contents in the weld joint.

For this purpose, it is in particular desirable to avoid fully brittle fracture in the weld joint.

For this purpose, the invention relates to a method for producing a welded steel blank according to claim 1.

According to particular embodiments, the method may comprise one or more of the features of claims 2 to 14, taken alone or according to any technically possible combination.

The invention further relates to a method for producing a welded, hot press-formed and cooled steel part according to claim 15.

According to a particular embodiment of this method for producing the welded, hot press-formed and cooled steel part, during the cooling step, the cooling rate is greater than or equal to the bainitic or martensitic cooling rate of the most hardenable among the substrates of the precoated sheets.

The invention also relates to a welded steel blank according to claim 17.

According to particular embodiments of the welded steel blank, the welded steel blank comprises one or more of the features of claims 18 to 26, taken alone or according to any technically possible combination.

The invention further relates to a welded, hot press-formed and cooled steel part according to claim 27.

According to particular embodiments of the welded, hot press-formed and cooled steel part, the welded, hot press-formed and cooled steel part may comprise one or several of the features of claims 28 to 34, taken alone or according to any possible combination.

The invention further relates to the use of a welded, hot press-formed and cooled steel part as described above for producing an anti-intrusion part or an energy-absorption part for a motor vehicle, see claim 35.

The invention will be better understood upon reading the following specification, given only by way of example and with reference to the appended drawings, wherein:

- Figure 1 is a perspective view of a precoated sheet comprising a removal zone in the precoating at the periphery of the sheet;
- Figure 2 is a perspective view of an initial precoated sheet;
- Figure 3 is a schematic cross-sectional view of the beginning of the welding step of a method according to the invention,
- Figure 4 is a schematic cross-sectional view of the end of the welding step of the method according to the invention, and
- Figure 5 is a schematic cross-sectional view of a welded steel blank according to the invention.

In the entire patent application, the contents of the elements are expressed in percentages by weight (wt.%).

The invention relates to a method for producing a welded steel blank 1.

The method comprises a first step of providing two precoated sheets 2.

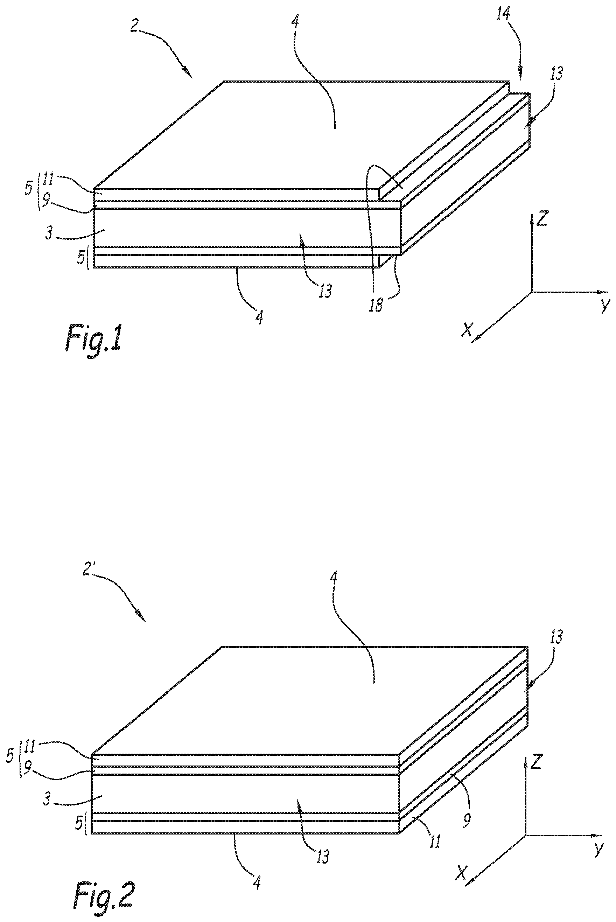

As shown in Figure 1, each precoated sheet 2 comprises two main faces 4 and at least one side face 13, extending between the two main faces 4, from one main face 4 to the other. In the example shown in Figure 1, the precoated sheet 2 comprises four side faces 13. For example, the side faces 13 form an angle comprised between 60° and 90° with one of the main faces 4.

Each precoated sheet 2 comprises a metallic substrate 3 having, on each of its main faces, a precoating 5. The precoating 5 is superimposed on the substrate 3 and in contact therewith.

The metallic substrate 3 is more particularly a steel substrate.

The steel of the substrate 3 is more particularly a steel having a ferrito-perlitic microstructure.

Preferably, the substrate 3 is made of a steel intended for thermal treatment, more particularly a press-hardenable steel, and for example a manganese-boron steel, such as for example a 22MnB5 type steel.

The steel of the substrate 3 comprises, and in particular consists of, by weight:

$$0.10\% \leq C \leq 0.5\%$$

$$0.5\% \leq Mn \leq 3\%$$

$$0.1\% \leq Si \leq 1\%$$

$$0.01\% \leq Cr \leq 1\%$$

$$Ti \leq 0.2\%$$

$$Al \leq 0.1\%$$

$$S \leq 0.05\%$$

$$P \leq 0.1\%$$

$$B \leq 0.010\%$$

the rest being iron and impurities resulting from manufacturing; or
the steel of the substrate 3 comprises, and in particular consists of, by weight:

$$0.040\% \leq C \leq 0.100\%$$

$$0.80\% \leq Mn \leq 2.00\%$$

$$Si \leq 0.30\%$$

$$S \leq 0.005\%$$

$$P \leq 0.030\%$$

$$0.010\% \leq Al \leq 0.070\%$$

$$0.015\% \leq Nb \leq 0.100\%$$

$$Ti \leq 0.080\%$$

$$N \leq 0.009\%$$

$$Cu \leq 0.100\%$$

$$Ni \leq 0.100\%$$

$$Cr \leq 0.100\%$$

$$Mo \leq 0.100\%$$

$$Ca \leq 0.006\%$$

the rest being iron and impurities resulting from manufacturing; or
the steel of the substrate 3 comprises, and in particular consists of, by weight:

$$0.24\% \leq C \leq 0.38\%$$

$$0.40\% \leq Mn \leq 3\%$$

$$0.10\% \leq Si \leq 0.70\%$$

$$0.015\% \leq Al \leq 0.070\%$$

$$0\% \leq Cr \leq 2\%$$

$$0.25\% \leq Ni \leq 2\%$$

$$0.015\% \leq Ti \leq 0.10\%$$

$$0\% \leq Nb \leq 0.060\%$$

$$0.0005\% \leq B \leq 0.0040\%$$

$$0.003\% \leq N \leq 0.010\%$$

$$0.0001\% \leq S \leq 0.005\%$$

$$0.0001\% \leq P \leq 0.025\%$$

wherein the titanium and nitrogen contents satisfy the following relationship :

$$Ti/N > 3.42,$$

and the carbon, manganese, chromium and silicon contents satisfy the following relationship:

$$2.6C + \frac{Mn}{5.3} + \frac{Cr}{13} + \frac{Si}{15} \geq 1.1\%,$$

the steel optionally comprising one or more of the following elements:

$$0.05\% \leq Mo \leq 0.65\%$$

$$0.001\% \leq W \leq 0.30\%$$

$$0.0005 \% \leq Ca \leq 0.005\%$$

the rest being iron and impurities inevitably resulting from manufacturing.

More particularly, the steel of the substrate 3 comprises, and in particular consists of, by weight:

$$0.15\% \leq C \leq 0.25\%$$

$$0.8\% \leq Mn \leq 1.8\%$$

$$0.1\% \leq Si \leq 0.35\%$$

$$0.01\% \leq Cr \leq 0.5\%$$

$$Ti \leq 0.1\%$$

$$Al \leq 0.1\%$$

$$S \leq 0.05\%$$

$$P \leq 0.1\%$$

$$B \leq 0.005\%$$

the rest being iron and impurities resulting from manufacturing.

According to one example, the substrates 3 of the two precoated sheets 2 have the same composition.

According to another example, the substrates 3 of the two precoated sheets 2 have different compositions. In particular, the two substrates 3 have different compositions each chosen among the four compositions mentioned above. For example, the steel of the substrate 3 of one precoated sheet 2 has the first composition mentioned above, while the steel of the substrate 3 of the other precoated sheet 2 has a composition chosen among the second, third or fourth compositions mentioned above.

The substrate 3 may be obtained, depending on its desired thickness, by hot rolling and/or by cold-rolling followed by annealing, or by any other appropriate method.

The substrate 3 advantageously has a thickness comprised between 0.8 mm and 5 mm, and more particularly comprised between 1.0 mm and 3.0 mm. The two precoated sheets 2 may have the same thickness or different thicknesses.

The precoating 5 is obtained by hot-dip coating, i.e. by immersion of the substrate 3 into a bath of molten metal.

The precoating 5 comprises at least an intermetallic alloy layer 9 in contact with the substrate 3. The intermetallic alloy layer 9 comprises at least iron and aluminum. The intermetallic alloy layer 9 is in particular formed by reaction between the substrate 3 and the molten metal of the bath. More particularly, the intermetallic alloy layer 9 comprises intermetallic compounds of the $Fe_x$-$Al_y$ type, and more particularly $Fe_2Al_5$.

In the example shown in Figure 1, the precoating 5 further comprises a metallic alloy layer 11 extending atop the intermetallic alloy layer 9. The metallic alloy layer 11 has a composition which is close to that of the molten metal in the bath. It is formed by the molten metal carried away by the sheet as it travels through the molten metal bath during hot-dip coating. The metallic alloy layer 11 is a layer of aluminum, or a layer of aluminum alloy or a layer of aluminum-based alloy.

In this context, an aluminum alloy refers to an alloy comprising more than 50% by weight of aluminum. An aluminum-based alloy is an alloy in which aluminum is the main element, by weight.

For example, the metallic alloy layer 11 is a layer of aluminum alloy further comprising silicon. More particularly, the metallic alloy layer 11 comprises, by weight:

$$- 8\% \leq Si \leq 11\%,$$

- 2% ≤ Fe ≤ 4%,

the rest being aluminum and possible impurities.

The metallic alloy layer 11 has, for example, a thickness comprised between 19 $\mu$m and 33 $\mu$m or between 10 $\mu$m and 20 $\mu$m.

In the example shown in Figure 1, where the precoating 5 comprises a metallic alloy layer 11, the thickness of the intermetallic alloy layer 9 is generally of the order of a few micrometers. In particular, its mean thickness is typically comprised between 2 and 8 micrometers.

The particular structure of the precoating 5 comprising the intermetallic alloy layer 9 and the metallic alloy layer 11 obtained by hot-dip coating is in particular disclosed in patent EP 2 007 545.

According to another embodiment, the precoating 5 only comprises the intermetallic alloy layer 9 as described above. In this case, the thickness of the intermetallic alloy layer 9 is for example comprised between 10 $\mu$m and 40 $\mu$m. Such a precoating 5 consisting of an intermetallic alloy 9 may for example be obtained by subjecting a precoating 5 comprising an intermetallic alloy layer 9 and a metallic alloy layer 11 as disclosed above to a pre-alloying treatment. Such a pre-alloying treatment is carried out at a temperature and for a holding time chosen so as to alloy the precoating 5 with the substrate 3 over at least a fraction of the thickness of the precoating 5. More particularly, the pre-alloying treatment may comprise the following steps: heating the sheet to a pre-alloying temperature comprised between 700°C and 900°C and holding the pre-alloyed sheet at this temperature for a time comprised between 2 minutes and 200 hours. In this case, the intermetallic alloy layer 9 may be composed of different intermetallic sublayers, such as $Fe_2Al_5$, $FeAl_3$, $FeAl$, $Fe_6Al_{12}Si_5$ and $FeAl_3$ sublayers.

Advantageously, as illustrated in Figure 1, the substrate 3 has a precoating 5 as described above on both of its main faces 4.

Furthermore, as shown in Figure 1, for each precoated sheet 2, the precoating 5 has been removed at a weld edge 14 of the precoated sheet 2, on each main face 4 of the precoated sheet 2 so as to create a removal zone 18 at the weld edge 14. More particularly, the precoating 5 has been removed over a removal fraction F comprised between 30% and 100% (boundaries included) of the thickness of the precoating 5.

The weld edge 14 comprises a peripheral portion of the precoated sheet 2, which is intended to be at least partially incorporated into the weld joint 22 during butt welding. More particularly, the weld edge 14 comprises a side face 13 of the precoated sheet 2 and a portion of the precoated sheet 2 extending from this side face 13 and comprising a portion of the precoating 5 and a portion of the substrate 3.

The removal of the removal fraction F of the precoating 5 at the weld edge 14 is preferably carried out using a laser beam, i.e. through laser ablation.

The removal zone 18 may extend over a width comprised between 0.5 mm and 3 mm from the side face 13 of the sheet 2.

Advantageously, the removal fraction F is strictly smaller than 100%, which means that only a portion of the precoating 5 is removed in the removal zone 18, while a portion thereof remains.

For example, in the embodiment shown in Figure 1, in the removal zone 18, the metallic alloy layer 11 is removed, while the intermetallic alloy layer 9 remains over at least a fraction of its thickness. In this case, the remaining intermetallic alloy layer 9 protects the areas of the welded blank 1 immediately adjacent to the weld joint 22 from oxidation and decarburization during subsequent hot press-forming steps and from corrosion during the in-use life.

According to an embodiment, during the removal step, the intermetallic alloy layer 9 is left in its integrality or remains over a fraction of its initial thickness strictly smaller than 100%, such as, for example, over only 60%, 80% or 90% of its initial thickness.

According to an alternative embodiment (not shown), during the removal step, the precoating 5 is removed over its entire thickness in the removal zone 18. In this embodiment, the removal fraction corresponds to 100% of the thickness of the precoating 5. In this embodiment, the precoating 5 is absent in the removal zone 18.

More particularly, the method comprises, prior to the provision step, a step of producing the two precoated sheets 2 as shown in Figure 1 from respective initial precoated sheets 2' as shown in Figure 2.

The initial precoated sheets 2' have substantially the same geometry and composition as the precoated sheets 2, the only difference being the absence of the removal zones 18. In other words, the precoating 5 of the intial precoated sheets 2' remains integral on both main faces 4 of the initial precoated sheets 2'. It entirely covers the two main faces of the initial precoated sheets 2'.

This step comprises a sub-step of obtaining the removal zone 18 on each main face 4 of each precoated sheet 2 through removal of the precoating 5 over the removal fraction F at the weld edge 14 through laser ablation.

Optionally, the method further comprises a step of preparing the weld edge 14 of at least one of the precoated sheets 2, and for example both precoated sheets 2.

The preparation of the weld edge 14 may comprise at least one of the following processing steps:

- brushing of the weld edge 14,
- machining of the weld edge 14,
- chamfering of the weld edge 14, and/or
- beveling of the weld edge 14.

The brushing step allows at least partially removing the traces of precoating 5 on the weld edge 14, and more particularly on the side face 13, resulting from mechanical cutting operations and/or from the removal of the precoating 5 at the weld edge 14.

Chamfering or beveling the weld edge 14 allows increasing the amount of filler material added without resulting in an over-thickness at the weld joint 22.

Machining of the weld edge 14 is carried out in case the shape of the weld edge 14 prior to machining is not sufficiently straight for laser welding.

The method further comprises a step of butt welding the precoated sheets 2, after an optional preparation of the weld edge 14, using a filler wire 20 so as to obtain a welded steel blank 1.

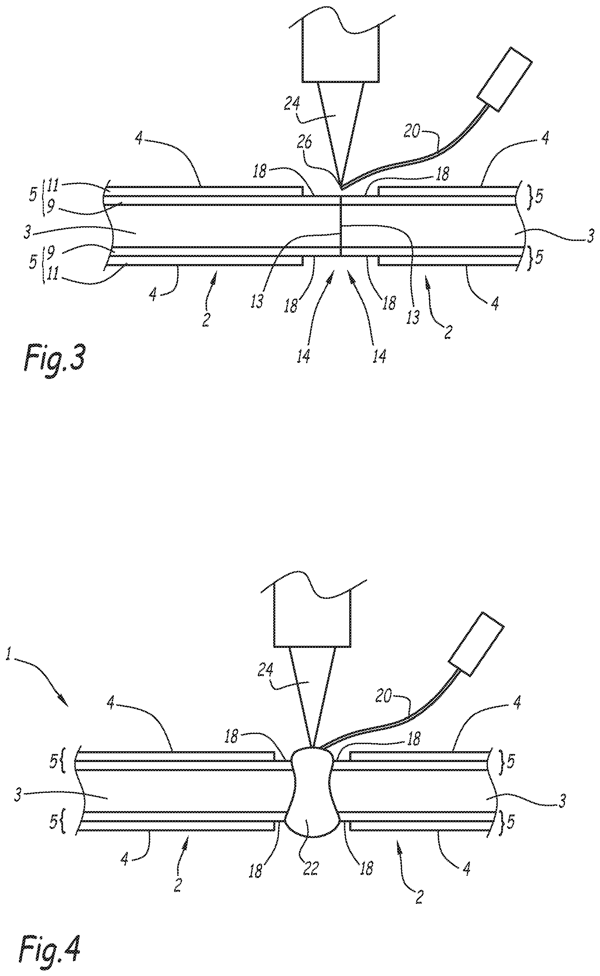

Figures 3 and 4 illustrate two stages of the welding step to create the welded steel blank 1.

In the example shown in Figures 3 and 4, the two precoated sheets 2 are precoated sheets as shown in Figure 1, which comprise a removal zone 18 at the respective weld edges 14, in which the metallic alloy layer 11 has been removed over its entire thickness, while the intermetallic alloy layer 9 remains integral.

The welding operation results in the formation of a molten metal zone at the junction between the two sheets 2, which subsequently solidifies forming the weld joint 22.

The welding step is a laser welding step, in which a laser beam 24 is directed towards the junction between the two sheets 2. This laser beam 24 is configured for melting the filler wire 20 at the point of impact 26 of the laser beam 24.

The laser welding step is for example carried out using a $CO_2$ laser or a solid state laser.

The laser source is preferably a high-powered laser source. It may be for example be selected from among a $CO_2$ laser with a wavelength of approximatively 10 micrometers, a solid state laser source with a wavelength of approximatively 1 micrometer or a semi-conductor laser source, for example a diode laser with a wavelength approximatively comprised between 0.8 and 1 micrometer.

The power of the laser source is chosen depending on the thickness of the sheets 2. In particular, the power is chosen so as to allow the fusion of the filler wire 20 and of the weld edges 14 of the sheets 2, as well as a sufficient mixing in the weld joint 22. For a $CO_2$ laser, the laser power is for example comprised between 3 kW and 12 kW. For a solid state laser or a semi-conductor laser, the laser power is for example comprised between 2 kW and 8 kW.

The diameter of the laser beam 24 at the point of its impact 26 on the sheets 2 may be equal to about 600 $\mu$m for both types of laser sources.

During the welding step, the welding is for example carried out under a protective atmosphere. Such a protective atmosphere in particular prevents the oxidation and decarburization of the area where the weld is being performed, the formation of boron nitride in the weld joint 22 and possible cold cracking due to hydrogen absorption.

The protective atmosphere is, for example, an inert gas or a mixture of inert gases. The inert gases may be helium or argon or a mixture of these gases.

During this welding step, the distance between the facing side faces 13 of the two sheets 1 is for example smaller than or equal to 0.3 mm, and more particularly smaller than or equal to 0.1 mm. Providing such a clearance between the facing side faces 13 of the two sheets 1 promotes the deposition of the filler metal during the welding operation and prevents the formation of an over-thickness at the weld joint 22. The deposition of the filler metal and the prevention of an over-thickness are also improved in the case where, during the preparation step, a chamfered or beveled edge has been produced at the weld edges 14 of the sheets 2.

In particular, the mean aluminum content $Al_{WJ}$ in the weld joint 22 is comprised between 0.1 wt.% and 1.2 wt.%. More particularly, the mean aluminum content $Al_{WJ}$ in the weld joint 22 is greater than or equal to 0.15 wt.%. The mean aluminum content $Al_{WJ}$ in the weld joint 22 is for example smaller than or equal to 0.8 wt.%.

This mean aluminum content $Al_{WJ}$ results from the portion of precoating 5 possibly remaining in the removal zone 18 after removal of the removal fraction F, as well as from the traces of aluminum present on the side face(s) 13 at the weld edge(s) 14, resulting from the removal operation and/or from the cutting operation. In the weld joint 22, it is mixed with the steel of the substrate 3 and of the filler wire 20.

During the welding step, the proportion of filler wire 20 added to the weld pool is for example comprised between 10% and 50%, and more particularly between 10% and 40%.

According to the invention, the composition of the filler wire 20 and the proportion of filler wire 20 added to the weld pool are chosen in such a manner that the thus obtained weld joint 22 is characterized by:

(a) a quenching factor $FT_{WJ}$ of the weld joint 22 such that $FT_{WJ} - 0.96 FT_{BM} \geq 0$ (criterion C1), where:

- $FT_{BM}$ is the quenching factor of the least hardenable steel substrate 3 among the steel substrates 3 of the two precoated sheets 2, and
- the quenching factors $FT_{WJ}$ and $FT_{BM}$ are determined using the following formula: FT=128 + 1553xC + 55xMn + 267xSi + 49xNi+ 5xCr - 79xAl - 2xNi$^2$ - 1532xC$^2$ - 5xMn$^2$ - 127xSi$^2$ - 40xCxNi - 4xNixMn, where Al, Cr, Ni, C, Mn and Si are, respectively, the mean aluminum, chromium, nickel, carbon, manganese and silicon content, expressed in weight percent, of the area whose quenching factor is to be determined, this area being the weld joint 22 in the case of $FT_{WJ}$ and the least hardenable substrate 3 in the case of $FT_{BM}$;

(b) a mean nickel content $Ni_{WJ}$ of the weld joint 22 fulfilling the following relationship: $Ni_{WJ} \leq 14-3.4xAl_{WJ}$, where $Al_{WJ}$ is the mean aluminum content of the weld joint (criterion C2); and

(c) a mean chromium content $Cr_{WJ}$ of the weld joint 22 fulfilling the following relationship: $Cr_{WJ} \leq 5-2xAl_{WJ}$, where $Al_{WJ}$ is the mean aluminum content of the weld joint 22 (criterion C3).

The least hardenable substrate 3 among the substrates 3 of the precoated sheets 2 is the substrate 3 having the lowest carbon content.

Indeed, the inventors of the present invention have found, in a surprising manner, that when the above criteria C1, C2 and C3 are cumulatively fulfilled, the part obtained from such a welded steel blank 1 after thermal treatment including an austenitization step (hot press-forming and cooling in the press tool) exhibits a Charpy energy greater than or equal to 25J/cm$^2$ at 20°C in the weld joint 22 and an ultimate tensile strength greater than or equal to the ultimate tensile strength of the weakest substrate among the substrates 3 of the precoated sheets 2.

The weakest substrate 3 is the substrate for which the product of the thickness by the ultimate tensile strength after hot press-forming and cooling is the lowest.

In particular, a Charpy energy of the weld joint 22 at 20°C greater than or equal to 25J/cm$^2$ allows avoiding fully brittle fracture in the weld joint.

Therefore, when the above criteria C1, C2 and C3 are cumulatively fulfilled, the presence of the weld joint 22 does not lower the properties of the welded steel part obtained by hot press-forming and cooling from the welded blank as compared to the properties, after hot press-forming and cooling, of the weakest substrate 3 among the substrates 3 of the precoated sheets 2, even if the weld joint 22 comprises a relatively high aluminum content.

Therefore, it is possible, through the method according to the invention, to obtain a part having a satisfactory crash performance, despite a possibly relatively high aluminum content in the weld joint 22.

Preferably, the composition of the filler wire 20 and the proportion of filler wire 20 added to the weld pool are further chosen in such a manner that the mean nickel content $Ni_{WJ}$ of the weld joint 22 is comprised between 0.1 wt.% and 13.7 wt.%, and more particularly between 0.2 wt.% and 12.0 wt.%.

For example, the composition of the filler wire 20 and the proportion of filler wire 20 added to the weld pool are further chosen in such a manner that the mean chromium content $Cr_{WJ}$ of the weld joint 22 is greater than or equal to 0.05 wt.%. Such a chromium content in the weld joint is advantageous, since it improves the corrosion resistance and hardenability of the weld joint 22.

Preferably, the composition of the weld joint 22 is such that it has a majoritarily martensitic microstructure after hot press-forming and cooling. By "majoritarily", it is meant that it comprises at least 95% of martensite, and more particularly 100% of martensite.

The filler wire 20 has a carbon content comprised between 0.01 wt.% and 0.45 wt.%. According to an example, the carbon content of the filler wire 20 is greater than or equal to the carbon content of the least hardenable substrate 3 among the substrates 3 of the two precoated sheets 2.

Indeed, the inventors of the present invention have found, in a surprising manner, that, in order to reduce the risk of occurrence of carbon segregations and consequently hardness peaks in the weld joint 22 after hot press-forming and cooling in the press tool, especially in the presence of important amounts of aluminum in the weld joint 22, the carbon content in the filler wire should be comprised between 0.01 wt.% and 0.45 wt.%. Therefore, using such a filler wire 20 reduces the risk of brittleness of the weld joint 22 and participates in avoiding failure in the weld joint 22 of the part obtained after hot press-forming and cooling in the press tool under tension perpendicular to the weld joint 22.

In particular, the inventors of the present invention have observed that the carbon content in the filler wire should be comprised between 0.01 wt.% and 0.45 wt.% in order to be able to obtain a weld joint 22 wherein the maximum hardness variation ∆HV(WJ) across the weld joint 22 is smaller than or equal to 20% of the mean hardness $HV_{mean}$(WJ) of the weld joint 22, in other words, $\dfrac{\Delta HV(WJ)}{HV_{mean}(WJ)} \times 100 \leq 20\%$, where ∆HV(WJ) is the difference between the maximum and the minimum hardness measured in the weld joint 22 and $HV_{mean}$(WJ) is the mean hardness measured in the weld joint 22.

Preferably, the filler wire 20 has a manganese content strictly smaller than the manganese content of the substrates 3 of the precoated sheets 2.

The filler wire 20 has the following composition, by weight:

0.01% ≤ C ≤ 0.45%, and for example 0.02% ≤ C ≤ 0.45%
0.001% ≤ Mn ≤ 0.45%, and for example 0.05% ≤ Mn ≤ 0.45%, even more particularly 0.05% ≤ Mn ≤ 0.20%,

$$0.001\% \leq Si \leq 1\%$$

$$0.02\% \leq Ni \leq 56\%,$$

and for example between 0.2% ≤ Ni ≤ 10.0%,

$$0.001\% \leq Cr \leq 30\%$$

$$0.001\% \leq Mo \leq 5\%$$

$$0.001\% \leq Al \leq 0.30\%$$

$$0.001\% \leq Cu \leq 1.80\%$$

$$0.001\% \leq Nb \leq 1.50\%$$

$$0.001\% \leq Ti \leq 0.30\%$$

$$0.001\% \leq N \leq 10\%$$

$$0.001\% \leq V \leq 0.1\%$$

$$0.001\% \leq Co \leq 0.20\%$$

the rest being iron and unavoidable impurities.

In the above filler wire composition, contents of Mn, Si, Cr, Mo, Al, Cu, Nb, Ti, N, V and Co equal to about 0.001% correspond to traces of these elements at the level of impurities resulting from the fusion of the raw materials and from the elaboration or result from the precision of the measuring devices for very low contents, which may result in the fact that an element completely absent from the analyzed steel be measured as present at very low contents, or that an element present at very low contents be measured as absent from the steel.

For example, the filler wire 20 consists of the above-mentioned elements.

The filler wire 20 is for example a solid wire or a flux cored wire.

The invention also relates to a welded steel blank 1 which may be obtained using the above-mentioned method.

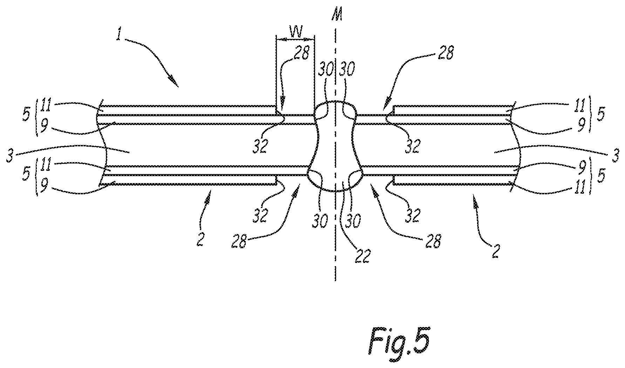

An example of such a welded steel blank is shown in Figure 5.

The welded steel blank 1 comprises two precoated sheets 2, each precoated sheet 2 comprising a steel substrate 3 having a precoating 5 on each of its main faces 4, the precoating 5 comprising an intermetallic alloy layer 9 comprising at least iron and aluminum and, optionally, a metallic alloy layer 11 extending atop the intermetallic alloy layer 9, the metallic alloy layer 11 being a layer of aluminum, a layer of aluminum alloy or a layer of aluminum-based alloy, the precoated sheets 2 being joined by a weld joint 22.

The welded steel blank 1 comprises, on each side of the weld joint 22, an intermediate zone 28 in which the precoating 5 has been removed over a removal zone F as defined above.

Furthermore, as can be seen in Figure 5, each intermediate zone 28 comprises an inner edge 30, located at the weld joint 22 and an outer edge 32, located away from the weld joint 22.

The width W of each intermediate zone 28 measured from the edge of the weld joint 22, i.e. the distance between the inner edge 30 and the outer edge 32, is comprised between 5 μm and 2000 μm, and more particularly between 5 μm and 1500 μm.

Preferably, in the intermediate zone 28, the precoating 5 has been removed over a removal fraction F strictly smaller than 100%. In particular, the metallic alloy layer 11 has been removed, but the intermetallic alloy layer 9 remains integral.

According to an alternative, in the intermediate zone 28, the precoating 5 has been removed over a removal fraction F equal to 100%, i.e. over its entire thickness.

Therefore, in the intermediate zone 28, the thickness of the precoating 5 is strictly smaller than in the zones of the precoated sheets 2 located further away from the weld joint 22, or is even absent.

The intermediate zone 28 results from the removal zone 18 on the corresponding precoated sheet 2.

The precoated sheets 2 and the weld joint 22 have the features disclosed above in relation to the method for producing the welded steel blank 1.

Therefore, the weld joint 22 respects the criteria C1, C2 and C3 defined above.

Furthermore, the mean aluminum content $Al_{WJ}$ of the weld joint 22 is comprised between 0.1 wt.% and 1.2 wt.%. More particularly, the mean aluminum content $Al_{WJ}$ of the weld joint 22 is greater than or equal to 0.15 wt.%. The mean aluminum content $Al_{WJ}$ of the weld joint 22 is for example smaller than or equal 0.8 wt.%.

The weld joint 22 is for example such that, after hot press-forming and cooling in the press tool, the Charpy energy of the weld joint 22 at 20°C is greater than or equal to 25 J/cm$^2$.

Furthermore, after hot press-forming and cooling, the ultimate tensile strength of the hot press-formed and cooled welded steel blank is greater than or equal to the ultimate tensile strength of the weakest substrate among the substrates 3 of the precoated sheets 2. In this context, the weakest substrate is defined as described above.

For example, the mean nickel content $Ni_{WJ}$ of the weld joint 22 is comprised between 0.1 wt.% and 13.6 wt.%, and more particularly between 0.2 wt.% and 12.0 wt.%.

For example, the mean chromium content $Cr_{WJ}$ of the weld joint 22 is greater than or equal to 0.05 wt.%.

The weld joint 22 is for example such that, after hot press-forming and cooling in the press tool, the maximum hardness variation $\Delta HV(WJ)$ across the weld joint 22 is smaller than or equal to 20% of the mean hardness $HV_{mean}(WJ)$ of the weld joint 22. In other words, $\frac{\Delta HV(WJ)}{HV_{mean}(WJ)} \times 100 \leq 20\%$.

The weld joint 22 is for example such that the mean hardness $HV_{mean}(WJ)$ in the weld joint 22 after hot press-forming and cooling in the press tool is smaller than or equal to 700 HV.

Preferably, the composition of the weld joint 22 is such that it has a majoritarily martensitic microstructure after hot press-forming and cooling. By "majoritarily", it is meant that it comprises at least 95% of martensite, and more particularly 100% of martensite.

The invention also relates to a method for producing a welded, hot press-formed and cooled steel part comprising:

- producing a welded steel blank 1 using the method as described above;
- heating the welded steel blank 1 so as to obtain a fully austenitic structure in the substrates 3 of the precoated sheets 2 constituting the welded blank 1;
- hot press-forming the welded steel blank 1 in a press tool to obtain a steel part; and
- cooling the steel part in the press tool.

More particularly, during the heating step, the welded steel blank 1 is heated to an austenitization temperature. It is then held at the austenitization temperature for a holding time depending on the thickness of the sheets 2 forming the welded steel blank 1. The holding time is chosen depending on the austenitization temperature in such a manner that the welded blank 1 is austenitized and such that an alloyed intermetallic layer of predetermined thickness is formed by alloying between the substrates 3 and the precoating 5. For example, the holding time is equal to about 5 minutes.

Prior to hot press-forming, the thus heated welded steel blank 1 is transferred into the hot forming press tool. The transfer time is advantageously comprised between 5 and 10 seconds. The transfer time is chosen to be as short as possible in order to avoid metallurgical transformations in the welded steel blank 1 prior to hot press-forming.

During the cooling step, the cooling rate is greater than or equal to the critical martensitic or bainitic cooling rate of at least one of the substrates 3 of the two steel sheets 2, and for example of the most hardenable steel sheet 1, i.e. the steel sheet having the lowest critical cooling rate.

After cooling, the weld joint 22 has a majoritarily martensitic microstructure. By "majoritarily", it is meant that it comprises at least 95% of martensite, and more particularly 100% of martensite.

The invention also relates to the welded, hot press-formed and cooled steel part obtained using the above-described method.

More particularly, this steel part comprises a first coated steel part portion and a second coated steel part portion, respectively resulting from the hot press-forming and cooling in the press tool of the two precoated steel sheets 2.

More particularly, each coated steel part portion comprises a steel substrate having, on each of its main faces, a coating comprising iron and aluminum, the first and second steel part portions being joined by a weld joint 22 as described above.

In particular, the coating of the first and second steel part portions results from the at least partial alloying of the precoating 5 during the hot-press forming.

The substrates of the first and second steel part portions have the compositions described above for the precoated sheets 2. They result from the hot-press forming and cooling of the substrates 3 of the precoated sheets 2.

Each steel part portion comprises, adjacent to the weld joint 22, and on each face of the steel part portion, an intermediate zone. This intermediate zone results from the intermediate zone 28 described with respect to the welded blank 1. In the intermediate zone, the thickness of the coating is strictly smaller than in the rest of the steel part portion, or the coating is even absent.

The weld joint 22 respects the criteria C1, C2 and C3 defined above.

Furthermore, the weld joint 22 has a mean aluminum content $Al_{WJ}$ comprised between 0.1 wt.% and 1.2 wt.%. The mean aluminum content of the weld joint 22 is for example greater than or equal to 0.15 wt.%. For example, the mean aluminum content of the weld joint 22 is smaller than or equal to 0.8 wt.%.

The Charpy energy of the weld joint 22 at 20°C is greater than or equal to $25 J/cm^2$ and the ultimate tensile strength of the part is greater than or equal to the ultimate tensile strength of the weakest substrate among the substrates 3 of the coated steel part portions.

For example, the weld joint 22 has a mean nickel content $Ni_{WJ}$ comprised between 0.1 wt.% and 13.6 wt.%, and more particularly between 0.2 wt.% and 12.0 wt.%.

For example, the weld joint 22 has a mean chromium content $Cr_{WJ}$ greater than or equal to 0.05 wt.%.

The weld joint 22 is for example such that the maximum hardness variation $\Delta HV(WJ)$ across the weld joint 22 is smaller than or equal to 20% of the mean hardness $HV_{mean}(WJ)$ of the weld joint 22. In other words,

$$\frac{\Delta HV(WJ)}{HV_{mean}(WJ)} \times 100 \leq 20\% .$$

The mean hardness $HV_{mean}(WJ)$ in the weld joint 22 is for example smaller than or equal to 700 HV.

Preferably, the weld joint 22 has a majoritarily martensitic microstructure. By "majoritarily", it is meant that it comprises at least 95% of martensite, and more particularly 100% of martensite.

The inventors of the present invention have carried out experiments in which welded steel blanks 1 were produced by butt laser welding together two precoated sheets A and B using a filler wire W.

Table 1 below lists the experimental conditions for each of the experiments E1 to E22 carried out.

The precoated sheets A and B initially provided had a precoating 5 on both of their main faces 4 with a thickness of about 25 micrometers.

For all of the tested precoated sheets A and B, the precoating 5 was obtained by hot-dip coating in a bath of molten metal and comprised a metallic alloy layer 11 and an intermetallic alloy layer 9.

The metallic alloy layer 11 of the precoating 5 comprised, by weight:

Si : 9%
Fe : 3%,
the rest consisting of aluminum and possible impurities resulting from elaboration.

The metallic alloy layer 11 had an average total thickness of 20 $\mu$m.

The intermetallic alloy layer 9 contained intermetallic compounds of the $Fe_x$-Aly type, and majoritarily $Fe_2Al_3$. $Fe_2Al_5$ and $Fe_xAl_ySi_z$. It has an average thickness of 5 $\mu$m.

For all of the tested precoated sheets A and B, a removal zone 18 has been created on both main faces by removal of the metallic alloy layer 11, while leaving the intermetallic alloy layer integral. The removal was carried out through laser ablation using the method disclosed in prior application WO 2007/118939.

Table 1: List of experimental conditions

| Exp. | Composition substrate sheet A | Thickness sheet A (mm) | Composition substrate sheet B | Thickness sheet B (mm) | Filler wire W | Proportion of filler wire added to weld pool (%) |
|---|---|---|---|---|---|---|
| E1 | S2 | 1.0 | S2 | 1.0 | W1 | 20 |
| E2 | S2 | 1.0 | S2 | 1.0 | W2 | 21 |
| E3 | S1 | 1.0 | S1 | 1.01 | n.a. | 0 |
| E4 | S1 | 2.0 | S1 | 1.4 | W1 | 20 |

(continued)

| Exp. | Composition substrate sheet A | Thickness sheet A (mm) | Composition substrate sheet B | Thickness sheet B (mm) | Filler wire W | Proportion of filler wire added to weld pool (%) |
|---|---|---|---|---|---|---|
| E5 | S1 | 2.0 | S1 | 1.4 | W2 | 23 |
| E6 | S1 | 1.0 | S1 | 1.0 | W4 | 19 |
| E7 | S3 | 1.0 | S3 | 1.0 | W1 | 5 |
| E8 | S3 | 1.0 | S3 | 1.0 | W1 | 17 |
| E9 | S3 | 1.0 | S3 | 1.0 | W2 | 20 |
| E10 | S3 | 1.0 | S3 | 1.0 | W3 | 17 |
| E11 | S3 | 1.0 | S3 | 1.0 | W4 | 18 |
| E12 | S3 | 1.0 | S3 | 1.0 | W1 | 34 |
| E13 | S3 | 1.0 | S3 | 1.0 | W2 | 42 |
| E14 | S3 | 1.0 | S3 | 1.0 | W3 | 33 |
| E15 | S3 | 1.0 | S3 | 1.0 | W4 | 37 |
| | | | | | | |
| E17 | S3 | 1.0 | S3 | 1.0 | W3 | 16 |
| E18 | S3 | 1.0 | S3 | 1.0 | W4 | 18 |
| | | | | | | |
| E20 | S3 | 1.8 | S3 | 1.4 | W4 | 24 |
| E21 | S3 | 1.0 | S4 | 1.2 | W5 | 23 |
| E22 | S3 | 1.0 | S4 | 1.2 | W5 | 19 |

In the above table, the experiments which are not according to the invention are underlined.

In the above table, "0" in the column "Proportion of filler wire added to the weld pool" means that no filler wire was added.

The steel substrates used in the different experiments mentioned in Table 1 have the compositions listed in Table 2 below, the contents being expressed in weight %.

Table 2: Compositions of the substrates

| | %C | %Mn | %Si | %Al | %Cr | %Ni | %Ti | %B | %S | %P |
|---|---|---|---|---|---|---|---|---|---|---|
| S1 | 0.22 | 1.17 | 0.28 | 0.04 | 0.19 | - | 0.04 | 0.0031 | 0.002 | 0.014 |
| S2 | 0.22 | 1.18 | 0.26 | 0.05 | 0.19 | - | 0.032 | 0.0032 | 0.002 | 0.016 |
| S3 | 0.23 | 1.19 | 0.25 | 0.03 | 0.17 | - | 0.004 | 0.0026 | 0.0006 | 0.01 |
| S4 | 0.24 | 1.24 | 0.27 | 0.04 | 0.17 | - | - | - | - | - |

For all the substrates, the rest of the composition is iron, possible impurities and unavoidable elements resulting from the manufacturing.

In the above Table 2, "-" means that the substrate comprises at most traces of the considered element.

The filler wires W used in the different experiments mentioned in Table 1 have the compositions listed in Table 3 below, the contents being expressed in weight %.

Table 3: Composition of the filler wires W

| Filler wire W | %C | %Mn | %Si | %Cr | %Ni | %Mo | %P | %S | Other elements (in %) |
|---|---|---|---|---|---|---|---|---|---|
| W1 | 0.29 | 0.94 | 0.13 | 0.04 | 0.05 | 0.008 | 0.01 | 0.004 | |
| W2 | 0.36 | 0.38 | 0.29 | 1.75 | 3.79 | 0.27 | 0.009 | <0.0015 | |

(continued)

| Filler wire W | %C | %Mn | %Si | %Cr | %Ni | %Mo | %P | %S | Other elements (in %) |
|---|---|---|---|---|---|---|---|---|---|
| W3 | 0.27 | 0.34 | 0.40 | - | 12.37 | - | <0.001 | <0.001 | |
| W4 | 0.02 | 0.30 | 0.30 | 0.05 | 53.24 | <0.021 | <0.001 | 0.002 | Al 0.058 |
| W5 | 0.03 | 1.80 | 0.50 | 20.50 | 25.00 | 4.70 | <0.001 | <0.001 | |

For all the welding wires, the rest of the composition is iron, possible impurities and unavoidable elements resulting from the manufacturing.

Unless otherwise specified, these filler wires may comprise Al, Cu, Nb, Ti, N, V and Co at contents equal to about 0.001 % corresponding to traces of these elements.

The inventors then measured, for each experiment E1 to E19, the composition of the obtained weld joint 22, using conventional measurement methods.

The mean manganese, aluminum, nickel, chromium and silicon contents of the weld joint 22 were determined by averaging over the entire surface of the weld analysed using an Energy Dispersive Spectroscopy detector integrated on a Scanning Electron Microscope. The mean carbon content was determined using a Castaing electron microprobe on a cross-section of the samples taken perpendicularly to the weld joint 22. The results of these measurements are indicated in Table 4 below.

Table 4: Measured contents in the weld joints

| Experiment | %C | %Mn | %Si | %Al | %Cr | %Ni |
|---|---|---|---|---|---|---|
| E1 | 0.24 | 1.05 | 0.26 | 0.25 | 0.14 | 0.01 |
| E2 | 0.26 | 1.02 | 0.26 | 0.21 | 0.43 | 0.57 |
| E3 | 0.22 | 1.05 | 0.29 | 0.54 | 0.15 | 0.02 |
| E4 | 0.23 | 0.99 | 0.29 | 0.51 | 0.14 | 0.04 |
| E5 | 0.25 | 0.89 | 0.28 | 0.35 | 0.47 | 0.70 |
| E6 | 0.18 | 0.98 | 0.25 | 0.37 | 0.11 | 9.90 |
| E7 | 0.22 | 1.10 | 0.49 | 0.28 | 0.16 | 0.01 |
| E8 | 0.24 | 1.03 | 0.51 | 0.29 | 0.14 | 0.01 |
| E9 | 0.26 | 1.19 | 0.25 | 0.36 | 0.41 | 0.57 |
| E10 | 0.24 | 0.96 | 0.53 | 0.37 | 0.14 | 2.20 |
| E11 | 0.19 | 1.05 | 0.25 | 0.34 | 0.12 | 7.79 |
| E12 | 0.25 | 1.00 | 0.41 | 0.15 | 0.11 | 0.01 |
| E13 | 0.28 | 0.83 | 0.26 | 0.30 | 0.71 | 1.29 |
| E14 | 0.24 | 1.02 | 0.28 | 0.27 | 0.12 | 4.08 |
| E15 | 0.15 | 0.93 | 0.20 | 0.29 | 0.11 | 17.36 |
| E17 | 0.24 | 1.16 | 0.25 | 1.04 | 0.13 | 2.19 |
| E18 | 0.19 | 0.95 | 0.27 | 0.73 | 0.14 | 8.77 |
| E20 | 0.17 | 1.15 | 0.35 | 1.03 | 0.16 | 12.59 |
| E21 | 0.19 | 1.16 | 0.31 | 1.00 | 4.66 | 5.65 |
| E22 | 0.19 | 1.12 | 0.31 | 0.86 | 3.80 | 4.65 |

Furthermore, the inventors subjected the thus produced welded steel blanks 1 to a heat treatment comprising an austenitization, followed by rapid cooling so as to obtain heat treated parts. Such heat treated parts have the same properties as hot press-formed and cooled parts.

The inventors then carried out measurements to determine the mechanical properties of these parts (ultimate tensile strength of the hot press-formed and cooled parts and Charpy energy of the weld joint).

They further compared the measured ultimate tensile strength of the hot press-formed and cooled parts ($UTS_{part}$)

with the ultimate tensile strength of the weakest substrate after heat treatment ($UTS_{weakest\ substrate}$).

The thus determined mechanical properties are shown in Table 5 below.

Table 5: Mechanical properties after heat treatment

| Experiment | $UTS_{part}$ /$UTS_{weakest\ substrate}$ (%) | Charpy energy at 20°C after heat treatment (J/cm$^2$) |
|---|---|---|
| E1 | 112 | 37 |
| E2 | 106 | 67 |
| E3 | 83 | 13 |
| E4 | 103 | 18 |
| E5 | 116 | 38 |
| E6 | 112 | 35 |
| E7 | 107 | 33 |
| E8 | 103 | 43 |
| E9 | 101 | 61 |
| E10 | 100 | 44 |
| E11 | 103 | 26 |
| E12 | 107 | 28 |
| E13 | 105 | 50 |
| E14 | 103 | 45 |
| E15 | 95 | 26 |
| E17 | 100 | 28 |
| E18 | 102 | 31 |
| E20 | 82 | n.d. |
| E21 | n.d. | 14 |
| E22 | n.d. | 20 |

In the above table, "n.d." means "not determined".

Tensile testing was carried out at ambient temperature (about 20°C) using the method disclosed in the following standards: NF EN ISO 4136 and NF ISO 6892-1 on a transverse welded tensile specimen of the type EN 12.5 x 50 (240 x 30 mm), extracted perpendicular to the laser weld direction. For each experiment (E1 to E21), five tensile tests were carried out.

The Charpy energy was measured using a standard Charpy impact test using a specimen having a V-shaped notch in the weld joint 22, the V-shaped notch having a depth of 2 mm and a total width of 8 mm, with the notch positioned in the weld joint with an accuracy better than or equal to 0.2 mm, the width being the dimension of the specimen parallel to the depth of the notch. The tests were carried out at 20°C.

Based on the measured compositions of the weld joints 22, the inventors determined, for each of the experiments E1 to E22, whether or not the criteria C1 to C3 defined above are complied with.

The results of this determination are summarized in Table 6 below.

Table 6: Determination of the criteria in the weld joints

| | Criteria | | |
|---|---|---|---|
| | C1 | C2 | C3 |
| Experiment | $FT_{WJ}$ - 0.96*$FT_{BM}$ | 14 - 3.4*$Al_{WJ}$ - $Ni_{WJ}$ | 5 - 2*$Al_{WJ}$ - $Cr_{WJ}$ |
| E1 | 8.36 | 13,15 | 4,36 |
| E2 | 42.62 | 12,72 | 4,15 |
| E3 | -21.68 | 12,14 | 3,77 |

(continued)

| | Criteria | | |
|---|---|---|---|
| | C1 | C2 | C3 |
| Experiment | $FT_{WJ} - 0.96*FT_{BM}$ | $14 - 3.4*Al_{WJ} - Ni_{WJ}$ | $5 - 2*Al_{WJ} - Cr_{WJ}$ |
| _E4_ | _-9.34_ | _12,23_ | _3,84_ |
| E5 | 35.32 | 12,11 | 3,83 |
| E6 | 122.83 | 2,84 | 4,15 |
| E7 | 28.22 | 13.05 | 4.28 |
| E8 | 45.48 | 13,01 | 4,28 |
| E9 | 35.10 | 12,21 | 3,87 |
| E10 | 105.12 | 10,54 | 4,12 |
| E11 | 122.98 | 5,05 | 4,20 |
| E12 | 48.20 | 13,49 | 4,59 |
| E13 | 70.00 | 11,69 | 3,69 |
| E14 | 121.54 | 9,00 | 4,34 |
| _E15_ | _-20.10_ | _-4,35_ | _4,31_ |
| E17 | 11.65 | 8,27 | 2,79 |
| E18 | 99.21 | 2,75 | 3,40 |
| _E20_ | _58.63_ | _-2,09_ | _2,78_ |
| _E21_ | _67.37_ | _4,95_ | _-1,66_ |
| _E22_ | _63.47_ | _6,43_ | _-0,52_ |
| Underlined values: not corresponding to the invention | | | |

As can be seen from Table 6, the experiments referenced E1, E2, E5 to E14, E17 and E18 are examples according to the invention: in these experiments, criteria C1 to C3 are satisfied.

On the contrary, the experiments referenced E3, E4, E15, and E20 to E22 are not according to the invention: in these experiments, at least one criterion among criteria C1 to C3 is not satisfied.

As can be seen from the above Table 5, in the experiments E1, E2, E5 to E14, E17 and E18, in which the criteria C1 to C3 are satisfied, the hot-press formed and cooled parts obtained from the welded blanks 1 have satisfying mechanical properties, in particular an ultimate tensile strength greater than or equal to that of the weakest substrate among the two substrates of the welded blank 1, after heat treatment, and a Charpy energy of the weld joint 22 at 20°C greater than or equal to 25 J/cm$^2$.

Therefore, with the parts obtained from the blanks 1 according to the invention, the presence of the weld joint 22 does not lower the properties of the welded steel part as compared to the properties of the weakest substrate 3 after hot-press forming and cooling. Therefore, these parts will have a satisfactory crash performance, despite the presence of aluminum in the weld joint.

On the contrary, in the experiments E3, E4, E14 to E15 and E20 to E22, which are not according to the invention, since at least one among criteria C1 to C3 is not fulfilled, at least one of the ultimate tensile strength of the hot-press formed and cooled part or the Charpy energy of the weld joint is too low, and therefore not satisfactory. With these parts, there is, therefore, a risk that the part will fail in the weld joint in a crash situation, for example.

The method according to the invention is therefore particularly advantageous, since it allows obtaining, after hot press-forming and cooling in the press tool, a part having excellent mechanical properties, including in the weld joint 22, despite the presence of aluminum in the weld joint.

It is therefore particularly well adapted for the fabrication of anti-intrusion parts, structural parts or energy-absorption parts that contribute to the safety of motor vehicles.

According to a particular embodiment of the method for producing the welded blank 1 according to the invention, the step of producing the two precoated sheets 2 comprises:

-    providing two initial precoated sheets 2',

- arranging these two initial precoated sheets 2' adjacent to each other while leaving a predetermined gap there-between; and

- simultaneously removing, through laser ablation, the precoating 5 on the two adjacent initial precoated sheets 2' over the removal fraction F so as to simultaneously create the removal zone 18 on adjacent faces of these two initial precoated sheets 2', the laser beam overlapping the two adjacent initial precoated sheets 2' during the removal step.

During the welding step, the thus prepared adjacent two precoated sheets 2 are welded with the laser beam spot overlapping the two precoated sheets 2. Preferably, the time between the end of the laser ablation and the beginning of the welding is less than or equal to 10 seconds.

Each intermediate zone 28 of the thus obtained welded blank 1 comprises solidification striations resulting from the laser ablation.

Due to the simultaneous removal of the precoating 5 over the removal fraction F using one laser beam overlapping both initial precoated sheets 2, the solidification striations on adjacent main faces 4 of the two precoated sheets 2 are symmetrical relative to a vertical median plane M between the two precoated sheets 2.

Furthermore, as mentioned previously with respect to Figure 5, each intermediate zone 28 comprises an inner edge 30, located at the weld joint 22 and an outer edge 32, located away from the weld joint 22.

In this particular embodiment, due to the simultaneous ablation method, the distance between the outer edges of the adjacent intermediate zones of the two precoated sheets is substantially constant along the longitudinal direction of the weld joint 22. By substantially constant, it is meant that the distance between the outer edges 32 of the adjacent intermediate zones of the two precoated sheets 2 varies by at most 5% along the weld joint 22, i.e. in the longitudinal direction of the weld joint 22.

The invention also relates to a part obtained by hot press-forming and cooling of the welded blank 1 obtained using the method according to the particular embodiment.

This hot press-formed and cooled part has the same features as mentioned above.

Furthermore, in this part, each intermediate zone comprises solidification striations, the solidification striations on adjacent main faces 4 of the two coated steel part portions being symmetrical relative to a vertical median plane between the two coated steel part portions.

Preferably, each intermediate zone comprises an inner edge, located at the weld joint 22 and an outer edge, located away from the weld joint 22 and the distance between the outer edges of the adjacent intermediate zones of the two coated steel part portions is substantially constant along the longitudinal direction of the weld joint 22. By substantially constant, it is meant that the distance between the outer edges of the adjacent intermediate zones of the two coated steel part portions varies by at most 5% along the weld joint 22, i.e. in the longitudinal direction of the weld joint 22.

## Claims

1. Method for producing a welded steel blank (1) comprising the successive steps of:

   - providing two precoated sheets (2), each precoated sheet (2) comprising a steel substrate (3) having a precoating (5) on each of its two main faces (4), the precoating (5) comprising an intermetallic alloy layer (9) comprising at least iron and aluminum and, optionally, a metallic alloy layer (11) extending atop the intermetallic alloy layer (9), the metallic alloy layer (11) being a layer of aluminum, a layer of aluminum alloy or a layer of aluminum-based alloy, the composition of the steel of the substrate (3) being chosen among the following compositions:

   the steel of the substrate (3) comprises, by weight:

$$0.10\% \leq C \leq 0.5\%$$

$$0.5\% \leq Mn \leq 4.5\%$$

$$0.1\% \leq Si \leq 1\%$$

$$0.01\% \leq Cr \leq 1\%$$

$$Ti \leq 0.2\%$$

$$Al \leq 0.1\%$$

$$S \leq 0.05\%$$

$$P \leq 0.1\%$$

$$B \leq 0.010\%$$

the rest being iron and impurities resulting from manufacturing,
or
the steel of the substrate (3) comprises, by weight:

$$0.040\% \leq C \leq 0.100\%$$

$$0.80\% \leq Mn \leq 2.00\%$$

$$Si \leq 0.30\%$$

$$S \leq 0.005\%$$

$$P \leq 0.030\%$$

$$0.010\% \leq Al \leq 0.070\%$$

$$0.015\% \leq Nb \leq 0.100\%$$

$$Ti \leq 0.080\%$$

$$N \leq 0.009\%$$

$$Cu \leq 0.100\%$$

$$Ni \leq 0.100\%$$

$$Cr \leq 0.100\%$$

$$Mo \leq 0.100\%$$

$$Ca \leq 0.006\%,$$

the rest being iron and impurities resulting from manufacturing,
or
the steel of the substrate (3) comprises, by weight:

$$0.24\% \leq C \leq 0.38\%$$

0.40% ≤ Mn ≤ 3%

0.10% ≤ Si ≤ 0.70%

0.015% ≤ Al ≤ 0.070%

0% ≤ Cr ≤ 2%

0.25% ≤ Ni ≤ 2%

0.015% ≤ Ti ≤ 0.10%

0 % ≤ Nb ≤ 0.060%

0.0005% ≤ B ≤ 0.0040%

0.003% ≤ N ≤ 0.010%

0.0001% ≤ S ≤ 0.005%

0.0001% ≤ P ≤ 0.025%

wherein the titanium and nitrogen contents satisfy the following relationship :

Ti/N > 3.42

and the carbon, manganese, chromium and silicon contents satisfy the following relationship :

$$2.6C + \frac{Mn}{5.3} + \frac{Cr}{13} + \frac{Si}{15} \geq 1.1\% \, ,$$

the steel optionally comprising one or more of the following elements:

0.05% ≤ Mo ≤ 0.65%

0.001% ≤ W ≤ 0.30%

0.0005 % ≤ Ca ≤ 0.005%

the rest being iron and impurities inevitably resulting from manufacturing,
each precoated sheet (2) comprising, on each main face (4) thereof, at a weld edge (14) intended to be incorporated at least partially into the weld joint (22), a removal zone (18) in which the precoating (5) has been removed over a removal fraction (F) comprised between 30% and 100% of the thickness of the precoating (5),

- butt welding the precoated sheets (2) using a filler wire (20) so as to create a weld joint (22) at the junction between the precoated sheets (2), the weld joint (22) having a mean aluminum content ($Al_{WJ}$) comprised between 0.1 wt.% and 1.2 wt.%, the welding step being performed using a laser beam,

**characterized in that** :

- the filler wire (20) has the following composition, by weight:

$$0.01\% \leq C \leq 0.45\%$$

$$0.001\% \leq Mn \leq 0.45\%$$

$$0.001\% \leq Si \leq 1\%$$

$$0.02\% \leq Ni \leq 56\%,$$

$$0.001\% \leq Cr \leq 30\%$$

$$0.001\% \leq Mo \leq 5\%$$

$$0.001\% \leq Al \leq 0.30\%$$

$$0.001\% \leq Cu \leq 1.80\%$$

$$0.001\% \leq Nb \leq 1.50\%$$

$$0.001\% \leq Ti \leq 0.30\%$$

$$0.001\% \leq N \leq 10\%$$

$$0.001\% \leq V \leq 0.1\%$$

$$0.001\% \leq Co \leq 0.20\%$$

the rest being iron and unavoidable impurities, and
- the composition of the filler wire (20) and the proportion of filler wire (20) added to the weld pool is chosen in such a manner that the thus obtained weld joint (22) is **characterized by** :

   (a) a quenching factor $FT_{WJ}$ of the weld joint (22) such that $FT_{WJ} - 0.96 FT_{BM} \geq 0$ (criterion C1), where:

   - $FT_{BM}$ is the quenching factor of the least hardenable steel substrate (3) among the steel substrates (3) of the two precoated sheets (2), and
   - the quenching factors $FT_{WJ}$ and $FT_{BM}$ are determined using the following formula: $FT = 128 + 1553xC + 55xMn + 267xSi + 49xNi + 5xCr - 79xAl - 2xNi^2 - 1532xC^2 - 5xMn^2 - 127xSi^2 - 40xCxNi - 4xNixMn$, where Al, Cr, Ni, C, Mn and Si are, respectively, the mean aluminum, chromium, nickel, carbon, manganese and silicon content, expressed in weight percent, of the area whose quenching factor is to be determined, this area being the weld joint (22) in the case of $FT_{WJ}$ and the least hardenable substrate in the case of $FT_{BM}$,

   (b) a mean nickel content ($Ni_{WJ}$) of the weld joint (22) fulfilling the following relationship: $Ni_{WJ} \leq 14 - 3.4xAl_{WJ}$, where $Al_{WJ}$ is the mean aluminum content of the weld joint (22) (criterion C2); and
   (c) a mean chromium content ($Cr_{WJ}$) of the weld joint (22) fulfilling the following relationship: $Cr_{WJ} \leq 5 - 2xAl_{WJ}$, where $Al_{WJ}$ is the mean aluminum content of the weld joint (22) (criterion C3).

2. Method according to claim 1, wherein the mean aluminum content ($Al_{WJ}$) of the weld joint (22) is greater than or equal to 0.15 wt.%.

3. Method according to claim 1 or claim 2, wherein the mean aluminum content ($Al_{WJ}$) of the weld joint (22) is smaller than or equal 0.8 wt.%.

4. Method according to any one of claims 1 to 3, wherein the mean nickel content ($Ni_{WJ}$) of the weld joint (22) is comprised between 0.1 wt.% and 13.6 wt.%.

5. Method according to any one of claims 1 to 4, wherein the mean nickel content ($Ni_{WJ}$) of the weld joint (22) is comprised between 0.2 wt.% and 12.0 wt.%.

6. Method according to any one of the preceding claims, wherein the welded steel blank is such that, after hot press-forming and cooling:

    - the Charpy energy of the weld joint (22) at 20°C is greater than or equal to 25 J/cm$^2$ ; and
    - the ultimate tensile strength of the hot press-formed and cooled steel welded steel blank is greater than or equal to the ultimate tensile strength of the weakest substrate among the substrates (3) of the precoated sheets (2), the weakest substrate (3) being the substrate (3) for which the product of the thickness by the ultimate tensile strength after hot press-forming and cooling is the lowest.

7. Method according to any one of claims 1 to 6, wherein, for at least one precoated sheet (2), and for example for both precoated sheets (2), the removal fraction (F) is strictly smaller than 100% of the thickness of the precoating (5).

8. Method according to claim 7, wherein, for at least one precoated sheet (2), the precoating (5) comprises a metallic alloy layer (11) extending atop the intermetallic alloy layer (9), the metallic alloy layer (11) being a layer of aluminum, a layer of aluminum alloy or a layer of aluminum-based alloy and wherein, for at least one precoated sheet (2), and for example for both precoated sheets (2), the metallic alloy layer (11) has been removed over its entire thickness, while the intermetallic alloy layer (9) remains integral in the removal zone (18) on each main face (4) of the precoated sheet (2).

9. Method according to any one of claims 1 to 6, wherein, for at least one precoated sheet (2) provided at the provision step, and for example for both precoated sheets (2), in the removal zone (18) on each main face (4) of the precoated sheet (2), the removal fraction is equal to 100% such that the precoating (5) has been removed over its entire thickness.

10. Method according to any one of the preceding claims, comprising, prior to the provision step, a step of producing the two precoated sheets (2) from respective initial precoated sheets (2'), this step comprising a sub-step of obtaining the removal zone (18) on each main face (4) of each precoated sheet (2) through removal of the precoating (5) over a fraction removal fraction (F) comprised between 30% and 100% of the thickness of the precoating (5) through laser ablation at the weld edge (14) of the precoated sheet (2).

11. Method according to claim 10, wherein the step of producing the two precoated sheets (2) comprising:

    - providing two initial precoated sheets (2'),
    - arranging these two initial precoated sheets (2') adjacent to each other while leaving a predetermined gap there-between; and
    - simultanously removing, through laser ablation, the precoating (5) on the two adjacent initial precoated sheets (2')so as to simultaneously create the removal zone (18) on adjacent faces of these two initial precoated sheets (2'), the laser beam overlapping the two adjacent initial precoated sheets (2') during the removal step.

12. Method according to any one of the preceding claims, further comprising, prior to butt welding, preparing the weld edge (14) of at least one of the precoated sheets (2), using at least one of the following processing steps: brushing, machining, chamfering and/or bevelling.

13. Method according to any one of the preceding claims, wherein, for at least one of the precoated sheets (2), the steel of the substrate (3) comprises, by weight:

$$0.15\% \leq C \leq 0.25\%$$

$$0.8\% \leq Mn \leq 1.8\%$$

$$0.1\% \leq Si \leq 0.35\%$$

$$0.01\% \leq Cr \leq 0.5\%$$

$$Ti \leq 0.1\%$$

$$Al \leq 0.1\%$$

$$S \leq 0.05\%$$

$$P \leq 0.1\%$$

$$B \leq 0.005\%$$

the rest being iron and impurities resulting from manufacturing.

14. Method according to any one of the preceding claims, wherein the welding is performed using a protection gas, in particular helium and/or argon.

15. Method for producing a welded and thereafter hot press-formed and cooled steel part, **characterized in that** the method comprises the successive steps of:

- carrying out the method according to any one of claims 1 to 14 in order to obtain a welded steel blank (1) ;
- heating the welded steel blank (1) so as to obtain a fully austenitic structure in the substrates (3) of the precoated sheets (2);
- hot press-forming the welded steel blank (1) in a press tool to obtain a steel part; and
- cooling the steel part in the press tool.

16. Method according to claim 15, wherein, during the cooling step, the cooling rate is greater than or equal to the bainitic or martensitic cooling rate of the most hardenable among the substrates (3) of the precoated sheets (2).

17. Welded steel blank (1) comprising two precoated sheets (2), each precoated sheet (2) comprising a steel substrate (3) having a precoating (5) on each of its main faces (4), the precoating (5) comprising an intermetallic alloy layer (9) comprising at least iron and aluminum and, optionally, a metallic alloy layer (11) extending atop the intermetallic alloy layer (9), the metallic alloy layer (11) being a layer of aluminum, a layer of aluminum alloy or a layer of aluminum-based alloy,
the composition of the steel of the substrate (3) being chosen among the following compositions:

the steel of the substrate (3) comprises, by weight:

$$0.10\% \leq C \leq 0.5\%$$

$$0.5\% \leq Mn \leq 4.5\%$$

$$0.1\% \leq Si \leq 1\%$$

$$0.01\% \leq Cr \leq 1\%$$

$$Ti \leq 0.2\%$$

$$Al \leq 0.1\%$$

$$S \leq 0.05\%$$

$$P \leq 0.1\%$$

$$B \leq 0.010\%$$

the rest being iron and impurities resulting from manufacturing,
or
the steel of the substrate (3) comprises, by weight:

$$0.040\% \leq C \leq 0.100\%$$

$$0.80\% \leq Mn \leq 2.00\%$$

$$Si \leq 0.30\%$$

$$S \leq 0.005\%$$

$$P \leq 0.030\%$$

$$0.010\% \leq Al \leq 0.070\%$$

$$0.015\% \leq Nb \leq 0.100\%$$

$$Ti \leq 0.080\%$$

$$N \leq 0.009\%$$

$$Cu \leq 0.100\%$$

$$Ni \leq 0.100\%$$

$$Cr \leq 0.100\%$$

$$Mo \leq 0.100\%$$

$$Ca \leq 0.006\%,$$

the rest being iron and impurities resulting from manufacturing,
or
the steel of the substrate (3) comprises, by weight:

$$0.24\% \leq C \leq 0.38\%$$

$$0.40\% \leq Mn \leq 3\%$$

$$0.10\% \leq Si \leq 0.70\%$$

$$0.015\% \leq Al \leq 0.070\%$$

$$0\% \leq Cr \leq 2\%$$

$$0.25\% \leq Ni \leq 2\%$$

$$0.015\% \leq Ti \leq 0.10\%$$

$$0\% \leq Nb \leq 0.060\%$$

$$0.0005\% \leq B \leq 0.0040\%$$

$$0.003\% \leq N \leq 0.010\%$$

$$0.0001\% \leq S \leq 0.005\%$$

$$0.0001\% \leq P \leq 0.025\%$$

wherein the titanium and nitrogen contents satisfy the following relationship :

$$Ti/N > 3.42$$

and the carbon, manganese, chromium and silicon contents satisfy the following relationship :

$$2.6C + \frac{Mn}{5.3} + \frac{Cr}{13} + \frac{Si}{15} \geq 1.1\%,$$

the steel optionally comprising one or more of the following elements:

$$0.05\% \leq Mo \leq 0.65\%$$

$$0.001\% \leq W \leq 0.30\%$$

$$0.0005\% \leq Ca \leq 0.005\%$$

the rest being iron and impurities inevitably resulting from manufacturing,
the precoated sheets (2) being joined by a weld joint (22), the weld joint (22) having a mean aluminum content ($Al_{WJ}$) comprised between 0.1 wt.% and 1.2 wt.%, the weld joint (22) being obtained using a laser beam, and the weld joint (22) being further **characterized by** :

  (a) a quenching factor $FT_{WJ}$ of the weld joint (22) such that $FT_{WJ} - 0.96FT_{BM} \geq 0$ (criterion C1), where:

    - $FT_{BM}$ is the quenching factor of the least hardenable steel substrate (3) among the steel substrates (3) of the two precoated sheets (2), and
    - the quenching factors $FT_{WJ}$ and $FT_{BM}$ are determined using the following formula: $FT = 128 + 1553xC + 55xMn + 267xSi + 49xNi + 5xCr - 79xAl - 2xNi^2 - 1532xC^2 - 5xMn^2 - 127xSi^2 - 40xCxNi - 4xNixMn$, where Al, Cr, Ni, C, Mn and Si are, respectively, the mean aluminum, chromium, nickel, carbon, manganese and silicon content, expressed in weight percent, of the area whose quenching factor is to be determined, this area being the weld joint (22) in the case of $FT_{WJ}$ and the least hardenable substrate in the case of $FT_{BM}$,

  (b) a mean nickel content ($Ni_{WJ}$) of the weld joint (22) fulfilling the following relationship: $Ni_{WJ} \leq 14 - 3.4xAl_{WJ}$,

where $Al_{WJ}$ is the mean aluminum content of the weld joint (22) (criterion C2); and
(c) a mean chromium content ($Cr_{WJ}$) of the weld joint (22) fulfilling the following relationship: $Cr_{WJ} \leq 5\text{-}2xAl_{WJ}$, where $Al_{WJ}$ is the mean aluminum content of the weld joint (22) (criterion C3), and

each precoated sheet (2) comprising, on each main face (4) thereof, adjacent the weld joint (22), an intermediate zone (28) in which the precoating (5) has been removed over a removal fraction (F) comprised between 30% and 100% of the thickness of the precoating (5).

18. Welded steel blank (1) according to claim 17, wherein, for each precoated sheet (2), the width of the intermediate zone (28) is comprised between 5 $\mu$m and 2000 $\mu$m from the edge of the weld joint (22).

19. Welded steel blank (1) according to one of claims 17 or 18, wherein, for at least one precoated sheet (2), and for example for both precoated sheets (2), the removal fraction (F) is equal to 100% of the thickness of the precoating (5).

20. Welded steel blank (1) according to any one of claims 17 to 19, wherein, for at least one precoated sheet (2), and for example for both precoated sheets (2), the removal fraction (F) strictly smaller than 100% of the thickness of the precoating (5).

21. Welded steel blank (1) according to claim 20, wherein, for at least one precoated sheet (2), and for example for both precoated sheets (2), the precoating (5) comprises a metallic alloy layer (11) extending atop the intermetallic alloy layer (9), the metallic alloy layer (11) being a layer of aluminum, a layer of aluminum alloy or a layer of aluminum-based alloy and wherein, for at least one precoated sheet (2), and for example for both precoated sheets (2), the metallic alloy layer (11) has been removed over its entire thickness, while the intermetallic alloy layer (9) remains integral in the removal zone (18) on each main face (4) of the precoated sheet (2).

22. Welded steel blank (1) according to any one of claims 17 to 21, wherein the nickel content ($Ni_{WJ}$) of the weld joint (22) is comprised between 0.1 wt.% and 13.6 wt.%, and more particularly between 0.2 wt.% and 12.0 wt.%.

23. Welded steel blank (1) according to any one of claims 17 to 22, wherein the welded steel blank (1) is such that, after hot press-forming and cooling:

- the Charpy energy of the weld joint (22) at 20°C is greater than or equal to 25 J/cm$^2$ ; and
- the ultimate tensile strength of the hot press-formed and cooled welded steel blank is greater than or equal to the ultimate tensile strength of the weakest substrate among the substrates (3) of the precoated sheets (2), the weakest substrate (3) being the substrate for which the product of the thickness by the ultimate tensile strength after hot press-forming and cooling is the lowest.

24. Welded steel blank (1) according to any one of claims 17 to 23, wherein the weld joint (22) is such that, after hot press-forming and cooling, the maximum hardness variation $\Delta HV(WJ)$ across the weld joint (22) is smaller than or equal to 20% of the mean hardness $HV_{mean}(WJ)$ of the weld joint (22).

25. Welded steel blank (1) according to any one of claims 17 to 24, wherein each intermediate zone (28) comprises solidification striations, the solidification striations on adjacent main faces (4) of the two precoated sheets (2) being symmetrical relative to a vertical median plane (M) between the two precoated sheets (2).

26. Welded steel blank (1) according to any one of claims 17 to 25, wherein each intermediate zone (28) comprises an inner edge (30), located at the weld joint (22) and an outer edge (32), located away from the weld joint (22) and wherein the distance between the outer edges (32) of the adjacent intermediate zones (28) of the two precoated sheets (2) is constant along the longitudinal direction of the weld joint (22).

27. Welded, hot press-formed and cooled steel part comprising a first coated steel part portion and a second coated steel part portion, each coated steel part portion comprising a steel substrate (3) having, on at least one of its main faces, a coating comprising at least iron and aluminum, the composition of the steel of the substrate (3) being chosen among the following compositions:

the steel of the substrate (3) comprises, by weight:

$$0.10\% \leq C \leq 0.5\%$$

$$0.5\% \leq Mn \leq 4.5\%$$

$$0.1\% \leq Si \leq 1\%$$

$$0.01\% \leq Cr \leq 1\%$$

$$Ti \leq 0.2\%$$

$$Al \leq 0.1\%$$

$$S \leq 0.05\%$$

$$P \leq 0.1\%$$

$$B \leq 0.010\%$$

the rest being iron and impurities resulting from manufacturing,
or
the steel of the substrate (3) comprises, by weight:

$$0.040\% \leq C \leq 0.100\%$$

$$0.80\% \leq Mn \leq 2.00\%$$

$$Si \leq 0.30\%$$

$$S \leq 0.005\%$$

$$P \leq 0.030\%$$

$$0.010\% \leq Al \leq 0.070\%$$

$$0.015\% \leq Nb \leq 0.100\%$$

$$Ti \leq 0.080\%$$

$$N \leq 0.009\%$$

$$Cu \leq 0.100\%$$

$$Ni \leq 0.100\%$$

$$Cr \leq 0.100\%$$

$$Mo \leq 0.100\%$$

$$Ca \leq 0.006\%,$$

the rest being iron and impurities resulting from manufacturing,
or
the steel of the substrate (3) comprises, by weight:

$$0.24\% \leq C \leq 0.38\%$$

$$0.40\% \leq Mn \leq 3\%$$

$$0.10\% \leq Si \leq 0.70\%$$

$$0.015\% \leq Al \leq 0.070\%$$

$$0\% \leq Cr \leq 2\%$$

$$0.25\% \leq Ni \leq 2\%$$

$$0.015\% \leq Ti \leq 0.10\%$$

$$0\% \leq Nb \leq 0.060\%$$

$$0.0005\% \leq B \leq 0.0040\%$$

$$0.003\% \leq N \leq 0.010\%$$

$$0.0001\% \leq S \leq 0.005\%$$

$$0.0001\% \leq P \leq 0.025\%$$

wherein the titanium and nitrogen contents satisfy the following relationship :

$$Ti/N > 3.42$$

and the carbon, manganese, chromium and silicon contents satisfy the following relationship :

$$2.6C + \frac{Mn}{5.3} + \frac{Cr}{13} + \frac{Si}{15} \geq 1.1\%,$$

the steel optionally comprising one or more of the following elements:

$$0.05\% \leq Mo \leq 0.65\%$$

$$0.001\% \leq W \leq 0.30\%$$

$$0.0005\% \leq Ca \leq 0.005\%$$

the rest being iron and impurities inevitably resulting from manufacturing,
the first and second coated steel part portions being joined by a weld joint (22), the weld joint (22) having a mean aluminum content ($Al_{WJ}$) comprised between 0.1 wt.% and 1.2 wt.%, the weld joint (22) being obtained using a laser beam, and the weld joint (22) being further **characterized by** :

(a) a quenching factor $FT_{WJ}$ of the weld joint (22) such that $FT_{WJ} -0.96FT_{BM} \geq 0$ (criterion C1), where:

- $FT_{BM}$ is the quenching factor of the least hardenable steel substrate (3) among the steel substrates (3) of the first and second steel part portions, and
- the quenching factors $FT_{WJ}$ and $FT_{BM}$ are determined using the following formula: $FT= 128 + 1553xC + 55xMn + 267xSi + 49xNi + 5xCr - 79xAl - 2xNi^2 - 1532xC^2 - 5xMn^2 - 127xSi^2 - 40xCxNi - 4xNixMn$, where Al, Cr, Ni, C, Mn and Si are, respectively, the mean aluminum, chromium, nickel, carbon, manganese and silicon content, expressed in weight percent, of the area whose quenching factor is to be determined, this area being the weld joint (22) in the case of $FT_{WJ}$ and the least hardenable substrate in the case of $FT_{BM}$,

(b) a mean nickel content ($Ni_{WJ}$) of the weld joint (22) fulfilling the following relationship: $Ni_{WJ} \leq 14-3.4xAl_{WJ}$, where $Al_{WJ}$ is the mean aluminum content of the weld joint (22) (criterion C2); and
(c) a mean chromium content ($Cr_{WJ}$) of the weld joint (22) fulfilling the following relationship: $Cr_{WJ} \leq 5-2xAl_{WJ}$, where $Al_{WJ}$ is the mean aluminum content of the weld joint (22) (criterion C3),

and
each coated steel part portion comprising, on each main face thereof, adjacent the weld joint (22), an intermediate zone (28) in which the thickness of the coating is strictly smaller than in adjacent zones of the coated steel part portion located at a greater distance from the weld joint (22) than the intermediate zone or in which the coating is absent.

28. Welded, hot press-formed and cooled steel part according to claim 27, wherein each intermediate zone comprises solidification striations, the solidification striations on adjacent main faces (4) of the two coated steel part portions being symmetrical relative to a vertical median plane between the two coated steel part portions.

29. Welded, hot press-formed and cooled steel part according to any one of claims 27 or 28, wherein each intermediate zone comprises an inner edge, located at the weld joint (22) and an outer edge, located away from the weld joint (22) and wherein the distance between the outer edges of the adjacent intermediate zones of the two coated steel part portions is constant along the longitudinal direction of the weld joint (22).

30. Welded, hot press-formed and cooled steel part according to any one of claims 27 to 29, wherein the mean hardness $HV_{mean}(WJ)$ in the weld joint (22) is smaller than or equal to 700 HV.

31. Welded, hot press-formed and cooled steel part according to any one of claims 27 to 30, wherein the mean nickel content ($Ni_{WJ}$) of the weld joint (22) is comprised between 0.1 wt.% and 13.6 wt.%, and more particularly between 0.2 wt.% and 12.0 wt.%.

32. Welded, hot press-formed and cooled steel part according to any one of claims 27 to 31, wherein :

- the Charpy energy of the weld joint (22) at 20°C is greater than or equal to 25 $J/cm^2$ ; and
- the ultimate tensile strength of the welded, hot press-formed and cooled steel part is greater than or equal to the ultimate tensile strength of the weakest substrate among the substrates (3) of the coated steel part portions, the weakest substrate (3) being the substrate for which the product of the thickness by the ultimate tensile strength is the lowest.

33. Welded, hot press-formed and cooled steel part according to any one of claims 27 to 32, wherein the maximum hardness variation $\Delta HV(WJ)$ across the weld joint (22) is smaller than or equal to 20% of the mean hardness HVmean(WJ) of the weld joint (22),

34. Welded, hot press-formed and cooled steel part according to any one of claims 27 to 33, wherein, the steel of the substrate (3) of at least one among the first and the second coated steel part portions comprises, by weight:

$$0.15\% \leq C \leq 0.25\%$$

$$0.8\% \leq Mn \leq 1.8\%$$

$$0.1\% \leq Si \leq 0.35\%$$

$$0.01\% \leq Cr \leq 0.5\%$$

$$Ti \leq 0.1\%$$

$$Al \leq 0.1\%$$

$$S \leq 0.05\%$$

$$P \leq 0.1\%$$

$$B \leq 0.005\%$$

the rest being iron and impurities resulting from manufacturing.

35. Use of a welded, hot press-formed and cooled steel part according to any one of claims 27 to 34 for producing an anti-intrusion part or an energy-absorption part for a motor vehicle.


**Patentansprüche**

1. Verfahren zum Herstellen eines geschweißten Stahlrohlings (1), umfassend die folgenden Schritte:

- Bereitstellen von zwei vorbeschichteten Blechen (2), jedes vorbeschichtete Blech (2) umfassend ein Stahlsubstrat (3), das eine Vorbeschichtung (5) auf jeder seiner zwei Hauptflächen (4) aufweist, die Vorbeschichtung (5) umfassend eine intermetallische Legierungsschicht (9), umfassend mindestens Eisen und Aluminium, und optional eine metallische Legierungsschicht (11), die sich auf der intermetallischen Legierungsschicht (9) erstreckt, wobei die metallische Legierungsschicht (11) eine Schicht aus Aluminium, eine Schicht aus Aluminiumlegierung oder eine Schicht aus einer Legierung auf Aluminiumbasis ist, wobei die Zusammensetzung des Stahls des Substrats (3) unter den folgenden Zusammensetzungen ausgewählt ist:

der Stahl des Substrats (3) umfasst in Gewichtsprozent:

$$0{,}10\ \% \leq C \leq 0{,}5\ \%$$

$$0{,}5\ \% \leq Mn \leq 4{,}5\ \%$$

$$0{,}1\ \% \leq Si \leq 1\ \%$$

$$0{,}01\ \% \leq Cr \leq 1\ \%$$

$$Ti \leq 0{,}2\ \%$$

$$Al \leq 0{,}1\ \%$$

$$S \leq 0{,}05\ \%$$

$$P \leq 0{,}1 \text{ %}$$

$$B \leq 0{,}010 \text{ %}$$

wobei der Rest aus Eisen und Verunreinigungen besteht, die aus der Herstellung resultieren, oder
der Stahl des Substrats (3) umfasst in Gewichtsprozent:

$$0{,}040 \text{ %} \leq C \leq 0{,}100 \text{ %}$$

$$0{,}80 \text{ %} \leq Mn \leq 2{,}00 \text{ %}$$

$$Si \leq 0{,}30 \text{ %}$$

$$S \leq 0{,}005 \text{ %}$$

$$P \leq 0{,}030 \text{ %}$$

$$0{,}010 \text{ %} \leq Al \leq 0{,}070 \text{ %}$$

$$0{,}015 \text{ %} \leq Nb \leq 0{,}100 \text{ %}$$

$$Ti \leq 0{,}080 \text{ %}$$

$$N \leq 0{,}009 \text{ %}$$

$$Cu \leq 0{,}100 \text{ %}$$

$$Ni \leq 0{,}100 \text{ %}$$

$$Cr \leq 0{,}100 \text{ %}$$

$$Mo \leq 0{,}100 \text{ %}$$

$$Ca \leq 0{,}006 \text{ %},$$

wobei der Rest aus Eisen und Verunreinigungen besteht, die aus der Herstellung resultieren, oder
der Stahl des Substrats (3) umfasst in Gewichtsprozent:

$$0{,}24 \text{ %} \leq C \leq 0{,}38 \text{ %}$$

$$0{,}40 \text{ %} \leq Mn \leq 3 \text{ %}$$

$$0{,}10 \text{ %} \leq Si \leq 0{,}70 \text{ %}$$

$$0{,}015 \text{ %} \leq Al \leq 0{,}070 \text{ %}$$

$$0 \text{ %} \leq Cr \leq 2 \text{ %}$$

$$0{,}25\ \% \le Ni \le 2\ \%$$

$$0{,}015\ \% \le Ti \le 0{,}10\ \%$$

$$0\ \% \le Nb \le 0{,}060\ \%$$

$$0{,}0005\ \% \le B \le 0{,}0040\ \%$$

$$0{,}003\ \% \le N \le 0{,}010\ \%$$

$$0{,}0001\ \% \le S \le 0{,}005\ \%$$

$$0{,}0001\ \% \le P \le 0{,}025\ \%$$

wobei der Gehalt an Titan und Stickstoff das folgende Verhältnis erfüllt:

$$Ti/N \ge 3{,}42$$

und der Gehalt an Kohlenstoff, Mangan, Chrom und Silizium das folgende Verhältnis erfüllt:

$$2{,}6C + \frac{Mn}{5{,}3} + \frac{Cr}{13} + \frac{Si}{15} \ge 1{,}1\ \%,$$

der Stahl umfassend eines oder mehrere der folgenden Elemente:

$$0{,}05\ \% \le Mo \le 0{,}65\ \%$$

$$0{,}001\ \% \le W \le 0{,}30\ \%$$

$$0{,}0005\ \% \le Ca \le 0{,}005\ \%$$

wobei der Rest aus Eisen und unvermeidliche Verunreinigungen besteht, die aus der Herstellung resultieren, jedes vorbeschichtete Blech (2) umfassend, auf jeder seiner Hauptflächen (4), an einer Schweißkante (14), die dazu bestimmt ist, zumindest teilweise in die Schweißnaht (22) integriert zu werden, eine Entfernungszone (18), in der die Vorbeschichtung (5) über einen Entfernungsanteil (F) entfernt wurde, der zwischen 30 % und 100 % der Stärke der Vorbeschichtung (5) ist,

- Stumpfschweißen der vorbeschichteten Bleche (2) unter Verwendung eines Fülldrahts (20), um eine Schweißverbindung (22) an der Verbindungsstelle zwischen den vorbeschichteten Blechen (2) zu erzeugen, wobei die Schweißverbindung (22) einen mittleren Aluminiumgehalt ($Al_{WJ}$) zwischen 0,1 Gewichts-% und 1,2 Gewichts-% aufweist, wobei der Schweißschritt unter Verwendung eines Laserstrahls durchgeführt wird,

**dadurch gekennzeichnet, dass**:

- der Fülldraht (20) die folgende Zusammensetzung nach Gewicht aufweist:

$$0{,}01\ \% \le C \le 0{,}45\ \%$$

$$0{,}001\ \% \le Mn \le 0{,}45\ \%$$

$$0{,}001\ \% \le Si \le 1\ \%$$

$$0,02\ \% \leq Ni \leq 56\ \%,$$

$$0,001\ \% \leq Cr \leq 30\ \%$$

$$0,001\ \% \leq Mo \leq 5\ \%$$

$$0,001\ \% \leq Al \leq 0,30\ \%$$

$$0,001\ \% \leq Cu \leq 1,80\ \%$$

$$0,001\ \% \leq Nb \leq 1,50\ \%$$

$$0,001\ \% \leq Ti \leq 0,30\ \%$$

$$0,001\ \% \leq N \leq 10\ \%$$

$$0,001\ \% \leq V \leq 0,1\ \%$$

$$0,001\ \% \leq Co \leq 0,20\ \%$$

wobei der Rest Eisen und unvermeidbare Verunreinigungen ist, und
- die Zusammensetzung des Fülldrahts (20) und der Anteil des dem Schmelzbad zugeführten Fülldrahts (20) gewählt ist, sodass die somit erlangte Schweißnaht (22) **gekennzeichnet ist durch**:

    (a) einen Abschreckfaktor $FT_{WJ}$ der Schweißnaht (22), sodass *$FT_{WJ}$ -0,96 $FT_{BM}$* $\geq 0$ (Kriterium C1), wobei:

        - $FT_{BM}$ der Abschreckfaktor des am wenigsten härtbaren Stahlsubstrats (3) von den Stahlsubstraten (3) der zwei vorbeschichteten Bleche (2) ist, und
        - die Abschreckfaktoren $FT_{WJ}$ und $FT_{BM}$ unter Verwendung der folgenden Formel bestimmt werden: $FT=128 + 1553xC + 55xMn + 267xSi + 49xNi + 5xCr - 79xAl - 2xNi^2 - 1532xC^2 - 5xMn^2 - 127xSi^2 - 40xCxNi - 4xNixMn$, wobei Al, Cr, Ni, C, Mn und Si jeweils der mittlere Aluminium-, Chrom-, Nickel-, Kohlenstoff-, Mangan- und Siliziumgehalt, ausgedrückt in Gewichtsprozent, des Bereichs sind, dessen Abschreckfaktor bestimmt werden soll, wobei dieser Bereich im Fall von $FT_{WJ}$ die Schweißnaht (22) und im Fall von $FT_{BM}$ das am wenigsten härtbare Substrat ist,

    (b) einen mittleren Nickelgehalt ($Ni_{WJ}$) der Schweißverbindung (22), der die folgende Beziehung erfüllt: $Ni_{WJ} \leq 14-3.4x\ Al_{WJ}$, wobei $Al_{WJ}$ der mittlere Aluminiumgehalt der Schweißverbindung (22) ist (Kriterium C2); und
    (c) einen mittleren Chromgehalt ($Cr_{WJ}$) der Schweißverbindung (22), der die folgende Beziehung erfüllt: $Cr_{WJ} \leq 5-2x\ Al_{WJ}$, wobei $Al_{WJ}$ der mittlere Aluminiumgehalt der Schweißnaht ist (22) (Kriterium C3).

**2.** Verfahren nach Anspruch 1, wobei der mittlere Aluminiumgehalt ($Al_{WJ}$) der Schweißverbindung (22) größer als oder gleich wie 0,15 Gewichts-% ist.

**3.** Verfahren nach Anspruch 1 oder Anspruch 2, wobei der mittlere Aluminiumgehalt ($Al_{WJ}$) der Schweißverbindung (22) kleiner als oder gleich wie 0,8 Gewichts-% ist.

**4.** Verfahren nach einem der Ansprüche 1 bis 3, wobei der mittlere Nickelgehalt ($Ni_{WJ}$) der Schweißverbindung (22) zwischen 0,1 Gewichts-% und 13,6 Gewichts-% ist.

**5.** Verfahren nach einem der Ansprüche 1 bis 4, wobei der mittlere Nickelgehalt ($Ni_{WJ}$) der Schweißverbindung (22) zwischen 0,2 Gewichts-% und 12,0 Gewichts-% ist.

6. Verfahren nach einem der vorherigen Ansprüche, wobei der geschweißte Stahlrohling derart ist, dass nach dem Warmpressen und Abkühlen:

- die Charpy-Energie der Schweißnaht (22) bei 20 °C größer als oder gleich wie 25 J/cm$^2$ ist; und
- die Zugfestigkeit des warmgepressten und abgekühlten geschweißten Stahlrohlings größer als oder gleich wie die Zugfestigkeit des schwächsten Substrats unter den Substraten (3) der vorbeschichteten Bleche (2) ist, wobei das schwächste Substrat (3) das Substrat (3) ist, für das das Produkt aus der Stärke und der Zugfestigkeit nach dem Warmpressen und Abkühlen am geringsten ist.

7. Verfahren nach einem der Ansprüche 1 bis 6, wobei für mindestens ein vorbeschichtetes Blech (2) und beispielsweise für beide vorbeschichteten Bleche (2) der Entfernungsanteil (F) strikt kleiner als 100 % der Stärke der Vorbeschichtung (5) ist.

8. Verfahren nach Anspruch 7, wobei für mindestens ein vorbeschichtetes Blech (2) die Vorbeschichtung (5) eine metallische Legierungsschicht (11) umfasst, die sich auf der intermetallischen Legierungsschicht (9) erstreckt, wobei die metallische Legierungsschicht (11) eine Schicht aus Aluminium, eine Schicht aus einer Aluminiumlegierung oder eine Schicht aus einer Legierung auf Aluminiumbasis ist, und wobei bei mindestens einem vorbeschichteten Blech (2) und beispielsweise bei beiden vorbeschichteten Blechen (2) die metallische Legierungsschicht (11) über ihre gesamte Stärke entfernt wurde, während die intermetallische Legierungsschicht (9) in der Entfernungszone (18) auf jeder Hauptfläche (4) des vorbeschichteten Blechs (2) integriert bleibt.

9. Verfahren nach einem der Ansprüche 1 bis 6, **dadurch gekennzeichnet, dass** für mindestens ein vorbeschichtetes Blech (2), das bei dem Bereitstellungsschritt bereitgestellt wird, und beispielsweise für beide vorbeschichteten Bleche (2), in der Entfernungszone (18) auf jeder Hauptfläche (4) des vorbeschichteten Blechs (2) der Entfernungsanteil gleich 100 % ist, sodass die Vorbeschichtung (5) über ihre gesamte Stärke entfernt wurde.

10. Verfahren nach einem der vorherigen Ansprüche, umfassend, vor dem Schritt des Bereitstellens, einen Schritt der Herstellung der beiden vorbeschichteten Bleche (2) aus den jeweiligen ersten vorbeschichteten Blechen (2'), wobei dieser Schritt einen Unterschritt umfasst, bei dem die Entfernungszone (18) auf jeder Hauptfläche (4) jedes vorbeschichteten Blechs (2) durch Entfernen der Vorbeschichtung (5) über einen Entfernungsanteil (F), der zwischen 30 % und 100 % der Stärke der Vorbeschichtung (5) liegt, durch Laserablation an der Schweißkante (14) des vorbeschichteten Blechs (2) erlangt wird.

11. Verfahren nach Anspruch 10, wobei der Schritt des Herstellens der zwei vorbeschichteten Bleche (2) Folgendes umfasst:

- Bereitstellen von zwei vorbeschichteten Blechen (2'),
- Anordnen dieser zwei anfänglich vorbeschichteten Bleche (2') angrenzend aneinander, wobei ein vorbestimmter Spalt dazwischen belassen wird; und
- gleichzeitiges Entfernen der Vorbeschichtung (5) auf den zwei angrenzenden vorbeschichteten Ausgangsblechen (2') durch Laserablation, um gleichzeitig die Entfernungszone (18) auf benachbarten Flächen dieser zwei vorbeschichteten Ausgangsbleche (2') zu erzeugen, wobei der Laserstrahl die zwei angrenzenden vorbeschichteten Ausgangsbleche (2') während des Entfernungsschritts überlappt.

12. Verfahren nach einem der vorherigen Ansprüche, wobei vor dem Stumpfschweißen die Schweißkante (14) mindestens eines der vorbeschichteten Bleche (2) durch mindestens einen der folgenden Bearbeitungsschritte vorbereitet wird: Bürsten, Bearbeiten, Anfasen und/oder Anschrägen.

13. Verfahren nach einem der vorherigen Ansprüche, wobei der Stahl des Substrats (3) für mindestens eines der vorbeschichteten Bleche (2) nach Gewicht Folgendes umfasst:

$$0,15 \% \leq C \leq 0,25 \%$$

$$0,8 \% \leq Mn \leq 1,8 \%$$

$$0,1 \% \leq Si \leq 0,35 \%$$

$$0{,}01\ \% \leq Cr \leq 0{,}5\ \%$$

$$Ti \leq 0{,}1\ \%$$

$$Al \leq 0{,}1\ \%$$

$$S \leq 0{,}05\ \%$$

$$P \leq 0{,}1\ \%$$

$$B \leq 0{,}005\ \%$$

wobei der Rest aus Eisen und Verunreinigungen besteht, die aus der Herstellung resultieren.

**14.** Verfahren nach einem der vorherigen Ansprüche, wobei das Schweißen unter Verwendung eines Schutzgases ausgeführt wird, insbesondere Helium und/oder Argon.

**15.** Verfahren zum Herstellen eines geschweißten und anschließend durch Warmpressen geformten und abgekühlten Stahlteils, **dadurch gekennzeichnet, dass** das Verfahren die folgenden aufeinanderfolgenden Schritte umfasst:

- Durchführen des Verfahrens nach einem der Ansprüche 1 bis 14, um einen geschweißten Stahlrohling (1) zu erlangen;
- Erhitzen des geschweißten Stahlrohlings (1), um eine vollständig austenitische Struktur in den Substraten (3) der vorbeschichteten Bleche (2) zu erlangen;
- Warmpressen des geschweißten Stahlrohlings (1) in einem Presswerkzeug, um ein Stahlteil zu erlangen; und
- Abkühlen des Stahlteils in dem Presswerkzeug.

**16.** Verfahren nach Anspruch 15, wobei während des Abkühlungsschritts die Abkühlungsgeschwindigkeit größer als oder gleich wie die bainitische oder martensitische Abkühlungsgeschwindigkeit des am meisten härtbaren Substrats (3) der vorbeschichteten Bleche (2) ist.

**17.** Geschweißter Stahlrohling (1), umfassend zwei vorbeschichtete Bleche (2), jedes vorbeschichtete Blech (2) umfassend ein Stahlsubstrat (3), das eine Vorbeschichtung (5) auf mindestens einer seiner Hauptflächen (4) aufweist, die Vorbeschichtung (5) umfassend eine intermetallische Legierungsschicht (9), umfassend mindestens Eisen und Aluminium, und optional eine metallische Legierungsschicht (11), die sich auf der intermetallischen Legierungsschicht (9) erstreckt, wobei die metallische Legierungsschicht (11) eine Schicht aus Aluminium, eine Schicht aus Aluminiumlegierung oder eine Schicht aus einer Legierung auf Aluminiumbasis ist, wobei die Zusammensetzung des Stahls des Substrats (3) unter den folgenden Zusammensetzungen ausgewählt ist:

der Stahl des Substrats (3) umfasst in Gewichtsprozent:

$$0{,}10\ \% \leq C \leq 0{,}5\ \%$$

$$0{,}5\ \% \leq Mn \leq 4{,}5\ \%$$

$$0{,}1\ \% \leq Si \leq 1\ \%$$

$$0{,}01\ \% \leq Cr \leq 1\ \%$$

$$Ti \leq 0{,}2\ \%$$

$$Al \leq 0{,}1\ \%$$

$$S \leq 0,05 \%$$

$$P \leq 0,1 \%$$

$$B \leq 0,010 \%$$

wobei der Rest aus Eisen und Verunreinigungen besteht, die aus der Herstellung resultieren, oder
der Stahl des Substrats (3) umfasst in Gewichtsprozent:

$$0,040 \% \leq C \leq 0,100 \%$$

$$0,80 \% \leq Mn \leq 2,00 \%$$

$$Si \leq 0,30 \%$$

$$S \leq 0,005 \%$$

$$P \leq 0,030 \%$$

$$0,010 \% \leq Al \leq 0,070 \%$$

$$0,015 \% \leq Nb \leq 0,100 \%$$

$$Ti \leq 0,080 \%$$

$$N \leq 0,009 \%$$

$$Cu \leq 0,100 \%$$

$$Ni \leq 0,100 \%$$

$$Cr \leq 0,100 \%$$

$$Mo \leq 0,100 \%$$

$$Ca \leq 0,006 \%,$$

wobei der Rest aus Eisen und Verunreinigungen besteht, die aus der Herstellung resultieren, oder
der Stahl des Substrats (3) umfasst in Gewichtsprozent:

$$0,24 \% \leq C \leq 0,38 \%$$

$$0,40 \% \leq Mn \leq 3 \%$$

$$0,10 \% \leq Si \leq 0,70 \%$$

$$0,015\ \% \le Al \le 0,070\ \%$$

$$0\ \% \le Cr \le 2\ \%$$

$$0,25\ \% \le Ni \le 2\ \%$$

$$0,015\ \% \le Ti \le 0,10\ \%$$

$$0\ \% \le Nb \le 0,060\ \%$$

$$0,0005\ \% \le B \le 0,0040\ \%$$

$$0,003\ \% \le N \le 0,010\ \%$$

$$0,0001\ \% \le S \le 0,005\ \%$$

$$0,0001\ \% \le P \le 0,025\ \%$$

wobei der Gehalt an Titan und Stickstoff das folgende Verhältnis erfüllt:

$$Ti/N \ge 3,42$$

und der Gehalt an Kohlenstoff, Mangan, Chrom und Silizium das folgende Verhältnis erfüllt:

$$2,6C + \frac{Mn}{5,3} + \frac{Cr}{13} + \frac{Si}{15} \ge 1,1\ \%,$$

der Stahl umfassend eines oder mehrere der folgenden Elemente:

$$0,05\ \% \le Mo \le 0,65\ \%$$

$$0,001\ \% \le W \le 0,30\ \%$$

$$0,0005\ \% \le Ca \le 0,005\ \%$$

wobei der Rest aus Eisen und unvermeidliche Verunreinigungen besteht, die aus der Herstellung resultieren, wobei die vorbeschichteten Bleche (2) durch eine Schweißnaht (22) verbunden sind, wobei die Schweißnaht (22) einen mittleren Aluminiumgehalt ($Al_{WJ}$) zwischen 0,1 Gewichts-% und 1,2 Gewichts-% aufweist, die Schweißnaht (22) unter Verwendung eines Laserstrahls erlangt wird und die Schweißnaht (22) ferner **gekennzeichnet ist, durch**:

(a) einen Abschreckfaktor $FT_{WJ}$ der Schweißnaht (22), sodass $FT_{WJ\ -0,96}\ FT_{BM} \ge 0$ (Kriterium C1), wobei:

- $FT_{BM}$ der Abschreckfaktor des am wenigsten härtbaren Stahlsubstrats (3) von den Stahlsubstraten (3) der zwei vorbeschichteten Bleche (2) ist, und
- die Abschreckfaktoren $FT_{WJ}$ und $FT_{BM}$ unter Verwendung der folgenden Formel bestimmt werden: $FT = 128 + 1553 \times C + 55 \times Mn + 267 \times Si + 49 \times Ni + 5 \times Cr - 79 \times Al - 2 \times Ni^2 - 1532 \times C^2 - 5 \times Mn^2 - 127 \times Si^2 - 40 \times C \times Ni - 4 \times Ni \times Mn$, wobei Al, Cr, Ni, C, Mn und Si jeweils der mittlere Aluminium-, Chrom-, Nickel-, Kohlenstoff-, Mangan- und Siliziumgehalt, ausgedrückt in Gewichtsprozent, des Bereichs sind, dessen Abschreckfaktor bestimmt werden soll, wobei dieser Bereich im Fall von $FT_{WJ}$ die Schweißnaht (22) und im Fall von $FT_{BM}$ das am wenigsten härtbare Substrat ist,

(b) einen mittleren Nickelgehalt ($Ni_{WJ}$) der Schweißverbindung (22), der die folgende Beziehung erfüllt: $Ni_{WJ} \leq 14\text{-}3.4x\ Al_{WJ}$, wobei $Al_{WJ}$ der mittlere Aluminiumgehalt der Schweißverbindung (22) ist (Kriterium C2); und

(c) einen mittleren Chromgehalt ($Cr_{WJ}$) der Schweißverbindung (22), der die folgende Beziehung erfüllt: $Cr_{WJ} \leq 5\text{-}2x\ Al_{WJ}$, wobei $Al_{WJ}$ der mittlere Aluminiumgehalt der Schweißnaht ist (22) (Kriterium C3).

jedes vorbeschichtete Blech (2) auf jeder seiner Hauptflächen (4) in der Nähe der Schweißnaht (22) eine Zwischenzone (28) aufweist, in der die Vorbeschichtung (5) über einen Entfernungsanteil (F) entfernt wurde, der zwischen 30 % und 100 % der Stärke der Vorbeschichtung (5) liegt.

18. Geschweißtes Stahlblech (1) nach Anspruch 17, wobei für jedes vorbeschichtete Blech (2) die Breite der Zwischenzone (28) zwischen 5 $\mu$m und 2000 $\mu$m von dem Rand der Schweißnaht (22) liegt.

19. Geschweißtes Stahlblech (1) nach einem der Ansprüche 17 oder 18, wobei für mindestens ein vorbeschichtetes Blech (2) und beispielsweise für beide vorbeschichteten Bleche (2) der Entfernungsanteil (F) gleich 100 % der Stärke der Vorbeschichtung (5) ist.

20. Geschweißtes Stahlblech (1) nach einem der Ansprüche 17 bis 19, wobei für mindestens ein vorbeschichtetes Blech (2) und beispielsweise für beide vorbeschichteten Bleche (2) der Entfernungsanteil (F) strikt kleiner als 100% der Stärke der Vorbeschichtung (5) ist.

21. Geschweißter Stahlrohling (1) nach Anspruch 20, wobei für mindestens ein vorbeschichtetes Blech (2) und beispielsweise für beide vorbeschichteten Bleche (2) die Vorbeschichtung (5) eine metallische Legierungsschicht (11) umfasst, die sich auf der intermetallischen Legierungsschicht (9) erstreckt, wobei die metallische Legierungsschicht (11) eine Schicht aus Aluminium, eine Schicht aus einer Aluminiumlegierung oder eine Schicht aus einer Legierung auf Aluminiumbasis ist, und wobei bei mindestens einem vorbeschichteten Blech (2) und beispielsweise bei beiden vorbeschichteten Blechen (2) die metallische Legierungsschicht (11) über ihre gesamte Stärke entfernt wurde, während die intermetallische Legierungsschicht (9) in der Entfernungszone (18) auf jeder Hauptfläche (4) des vorbeschichteten Blechs (2) integriert bleibt.

22. Geschweißter Stahlrohling (1) nach einem der Ansprüche 17 bis 21, wobei der Nickelgehalt ($Ni_{WJ}$) der Schweißverbindung (22) zwischen 0,1 Gewichts-% und 13,6 Gewichts-%, insbesondere zwischen 0,2 Gewichts-% und 12,0 Gewichts-% liegt.

23. - Geschweißter Stahlrohling (1) nach einem der Ansprüche 17 bis 22, wobei der geschweißte Stahlrohling (1) derart ist, dass nach dem Warmpressen und Abkühlen:

   - die Charpy-Energie der Schweißnaht (22) bei 20 °C größer als oder gleich wie 25 J/cm$^2$ ist; und
   - die Zugfestigkeit des warmgepressten und abgekühlten geschweißten Stahlrohlings größer als oder gleich wie die Zugfestigkeit des schwächsten Substrats unter den Substraten (3) der vorbeschichteten Bleche (2) ist, wobei das schwächste Substrat (3) das Substrat ist, für das das Produkt aus der Stärke und der Zugfestigkeit nach dem Warmpressen und Abkühlen am geringsten ist.

24. Geschweißter Stahlrohling (1) nach einem der Ansprüche 17 bis 23, wobei die Schweißnaht (22) derart ist, dass nach Warmpressen und Abkühlen die maximale Härtevariation $\Delta HV(WJ)$ über die Schweißnaht (22) kleiner als oder gleich wie 20 % der mittleren Härte $HV_{mittel}(WJ)$ der Schweißnaht (22) ist.

25. Geschweißter Stahlrohling (1) nach einem der Ansprüche 17 bis 24, wobei jede Zwischenzone (28) Erstarrungsstreifen aufweist, wobei die Erstarrungsstreifen auf benachbarten Hauptflächen (4) der zwei vorbeschichteten Bleche (2) symmetrisch in Bezug auf eine vertikale Mittelebene (M) zwischen den zwei vorbeschichteten Blechen (2) sind.

26. - Geschweißter Stahlrohling (1) nach einem der Ansprüche 17 bis 25, wobei jede Zwischenzone (28) eine an der Schweißnaht (22) befindliche Innenkante (30) und eine von der Schweißnaht (22) entfernte Außenkante (32) aufweist und wobei der Abstand zwischen den Außenkanten (32) der benachbarten Zwischenzonen (28) der zwei vorbeschichteten Bleche (2) entlang der Längsrichtung der Schweißnaht (22) konstant ist.

27. Geschweißtes, warmgepresstes und gekühltes Stahlteil, umfassend einen ersten beschichteten Stahlteilabschnitt und einen zweiten beschichteten Stahlteilabschnitt, wobei jeder beschichtete Stahlteilabschnitt ein Stahlsubstrat (3) umfasst, das auf mindestens einer seiner Hauptflächen eine Beschichtung aufweist, die mindestens Eisen und Aluminium umfasst, wobei die Zusammensetzung des Stahls des Substrats (3) unter den folgenden Zusammensetzungen ausgewählt ist:

der Stahl des Substrats (3) umfasst in Gewichtsprozent:

$$0,10\ \% \leq C \leq 0,5\ \%$$

$$0,5\ \% \leq Mn \leq 4,5\ \%$$

$$0,1\ \% \leq Si \leq 1\ \%$$

$$0,01\ \% \leq Cr \leq 1\ \%$$

$$Ti \leq 0,2\ \%$$

$$Al \leq 0,1\ \%$$

$$S \leq 0,05\ \%$$

$$P \leq 0,1\ \%$$

$$B \leq 0,010\ \%$$

wobei der Rest aus Eisen und Verunreinigungen besteht, die aus der Herstellung resultieren, oder
der Stahl des Substrats (3) umfasst in Gewichtsprozent:

$$0,040\ \% \leq C \leq 0,100\ \%$$

$$0.80\ \% \leq Mn \leq 2.00\ \%$$

$$Si \leq 0,30\ \%$$

$$S \leq 0,005\ \%$$

$$P \leq 0,030\ \%$$

$$0,010\ \% \leq Al \leq 0,070\ \%$$

$$0,015\ \% \leq Nb \leq 0,100\ \%$$

$$Ti \leq 0,080\ \%$$

$$N \leq 0,009\ \%$$

$$Cu \leq 0,100\ \%$$

$$Ni \leq 0,100\ \%$$

$$Cr \leq 0,100\ \%$$

$$Mo \leq 0,100\ \%$$

$$Ca \leq 0,006\ \%,$$

wobei der Rest aus Eisen und Verunreinigungen besteht, die aus der Herstellung resultieren, oder
der Stahl des Substrats (3) umfasst in Gewichtsprozent:

$$0,24\ \% \leq C \leq 0,38\ \%$$

$$0,40\ \% \leq Mn \leq 3\ \%$$

$$0,10\ \% \leq Si \leq 0,70\ \%$$

$$0,015\ \% \leq Al \leq 0,070\ \%$$

$$0\ \% \leq Cr \leq 2\ \%$$

$$0,25\ \% \leq Ni \leq 2\ \%$$

$$0,015\ \% \leq Ti \leq 0,10\ \%$$

$$0\ \% \leq Nb \leq 0,060\ \%$$

$$0,0005\ \% \leq B \leq 0,0040\ \%$$

$$0,003\ \% \leq N \leq 0,010\ \%$$

$$0,0001\ \% \leq S \leq 0,005\ \%$$

$$0,0001\ \% \leq P \leq 0,025\ \%$$

wobei der Gehalt an Titan und Stickstoff das folgende Verhältnis erfüllt:

$$Ti/N \geq 3,42$$

und der Gehalt an Kohlenstoff, Mangan, Chrom und Silizium das folgende Verhältnis erfüllt:

$$2,6C + \frac{Mn}{5,3} + \frac{Cr}{13} + \frac{Si}{15} \geq 1,1\ \%,$$

der Stahl umfassend eines oder mehrere der folgenden Elemente:

$$0,05\ \% \leq Mo \leq 0,65\ \%$$

$$0,001\ \% \leq W \leq 0,30\ \%$$

$$0,0005\ \% \le Ca \le 0,005\ \%$$

wobei der Rest aus Eisen und unvermeidliche Verunreinigungen besteht, die aus der Herstellung resultieren, wobei der erste und der zweite beschichtete Stahlteilabschnitt durch eine Schweißverbindung (22) verbunden sind, wobei die Schweißnaht (22) einen mittleren Aluminiumgehalt ($Al_{WJ}$) zwischen 0,1 Gewichts-% und 1,2 Gewichts-% aufweist, die Schweißnaht (22) unter Verwendung eines Laserstrahls erlangt wird und die Schweißnaht (22) ferner **gekennzeichnet ist, durch**:

(a) einen Abschreckfaktor $FT_{WJ}$ der Schweißnaht (22), sodass $FT_{WJ}$ *-0,96 $FT_{BM}$* $\ge 0$ (Kriterium C1), wobei:

- $FT_{BM}$ der Abschreckfaktor des am wenigsten härtbaren Stahlsubstrats (3) von den Stahlsubstraten (3) des ersten und des zweiten Stahlteilabschnitts ist, und
- die Abschreckfaktoren $FT_{WJ}$ und $FT_{BM}$ nach der folgenden Formel bestimmt werden: FT= 128 + 1553xC + 55xMn + 267xSi + 49xNi + 5xCr - 79xAl - 2xNi$^2$ - 1532xC$^2$ - 5xMn$^2$ - 127xSi$^2$ - 40xCxNi - 4xNixMn, wobei Al, Cr, Ni, C, Mn und Si jeweils der mittlere Aluminium-, Chrom-, Nickel-, Kohlenstoff-, Mangan- und Siliziumgehalt, ausgedrückt in Gewichtsprozent, des Bereichs sind, dessen Abschreckfaktor bestimmt werden soll, wobei dieser Bereich im Fall von $FT_{WJ}$ die Schweißnaht (22) und im Fall von $FT_{SM}$ das am wenigsten härtbare Substrat ist,

(b) einen mittleren Nickelgehalt ($Ni_{WJ}$) der Schweißverbindung (22), der die folgende Beziehung erfüllt: $Ni_{WJ}$ $\le$ 14-3,4x $Al_{WJ}$, wobei $Al_{WJ}$ der mittlere Aluminiumgehalt der Schweißverbindung (22) ist (Kriterium C2); und
(c) einen mittleren Chromgehalt ($Cr_{WJ}$) der Schweißverbindung (22), der die folgende Beziehung erfüllt: $Cr_{WJ}$ $\le$ 5-2x $Al_{WJ}$, wobei $Al_{WJ}$ der mittlere Aluminiumgehalt der Schweißnaht ist (22) (Kriterium C3).

jeder beschichtete Stahlteilabschnitt umfassend, auf jeder seiner Hauptflächen angrenzend an die Schweißnaht (22), eine Zwischenzone (28), in der die Stärke der Beschichtung strikt geringer ist als in angrenzenden Zonen des beschichteten Stahlteilabschnitts, die sich in einem größeren Abstand von der Schweißnaht (22) befinden als die Zwischenzone oder in denen die Beschichtung fehlt.

28. Geschweißtes, durch Warmpressen geformtes und abgekühltes Stahlteil nach Anspruch 27, wobei jede Zwischenzone Erstarrungsstreifen aufweist, wobei die Erstarrungsstreifen auf benachbarten Hauptflächen (4) der beiden beschichteten Stahlteilabschnitte symmetrisch in Bezug auf eine vertikale Mittelebene zwischen den zwei beschichteten Stahlteilabschnitten sind.

29. Geschweißtes, warmgepresstes und gekühltes Stahlteil nach einem der Ansprüche 27 oder 28, wobei jede Zwischenzone eine an der Schweißnaht (22) befindliche Innenkante und eine von der Schweißnaht (22) entfernte Außenkante aufweist und wobei der Abstand zwischen den Außenkanten der benachbarten Zwischenzonen der zwei beschichteten Stahlteilabschnitte entlang der Längsrichtung der Schweißnaht (22) konstant ist.

30. Geschweißtes, warmgepresstes und abgekühltes Stahlteil nach einem der Ansprüche 27 bis 29, wobei die mittlere Härte $HV_{mittel}$(WJ) in der Schweißnaht (22) kleiner als oder gleich wie 700 HV ist.

31. Geschweißtes, warmgepresstes und abgekühltes Stahlteil nach einem der Ansprüche 27 bis 30, wobei der mittlere Nickelgehalt ($Ni_{WJ}$) der Schweißverbindung (22) zwischen 0,1 Gewichts-% und 13,6 Gewichts-%, insbesondere zwischen 0,2 Gewichts-% und 12,0 Gewichts-%, liegt.

32. Geschweißtes, durch Warmpressen geformtes und abgekühltes Stahlteil nach einem der Ansprüche 27 bis 31, wobei:

- die Charpy-Energie der Schweißnaht (22) bei 20 °C größer als oder gleich wie 25 J/cm$^2$ ist; und
- die Zugfestigkeit des geschweißten, warmgepressten und abgekühlten Stahlteils größer als oder gleich wie die Zugfestigkeit des schwächsten Substrats von den Substraten (3) der beschichteten Stahlteilabschnitte ist, wobei das schwächste Substrat (3) das Substrat ist, bei dem das Produkt aus der Stärke und der Zugfestigkeit am geringsten ist.

33. Geschweißtes, warmgepresstes und abgekühltes Stahlteil nach einem der Ansprüche 27 bis 32, wobei die maximale

EP 3 902 651 B1

Härteabweichung $\Delta$HV(WJ) an der Schweißnaht (22) kleiner als oder gleich wie 20 % der mittleren Härte HV$_{mittel}$(WJ) der Schweißnaht (22) ist,

**34.** Geschweißtes, warmgepresstes und gekühltes Stahlteil nach einem der Ansprüche 27 bis 33, wobei der Stahl des Substrats (3) mindestens eines von dem ersten und dem zweiten beschichteten Stahlteilabschnitt in Gewichtsprozent Folgendes umfasst:

$$0,15 \% \leq C \leq 0,25 \%$$

$$0,8 \% \leq Mn \leq 1,8 \%$$

$$0,1 \% \leq Si \leq 0,35 \%$$

$$0,01 \% \leq Cr \leq 0,5 \%$$

$$Ti \leq 0,1 \%$$

$$Al \leq 0,1 \%$$

$$S \leq 0,05 \%$$

$$P \leq 0,1 \%$$

$$B \leq 0,005 \%$$

wobei der Rest aus Eisen und Verunreinigungen besteht, die aus der Herstellung resultieren.

**35.** Verwendung eines geschweißten, warmgepressten und abgekühlten Stahlteils nach einem der Ansprüche 27 bis 34 zum Herstellen eines einbruchsicheren Teils oder eines energieabsorbierenden Teils für ein Kraftfahrzeug.

**Revendications**

**1.** Procédé de production d'une ébauche en acier soudé (1), comprenant les étapes successives de :

- fourniture de deux tôles pré-revêtues (2), chaque tôle pré-revêtue (2) comprenant un substrat en acier (3) ayant un pré-revêtement (5) sur chacune de ses deux faces principales (4), le pré-revêtement (5) comprenant une couche d'alliage intermétallique (9) comprenant au moins du fer et de l'aluminium et, facultativement, une couche d'alliage métallique (11) s'étendant sur la couche d'alliage intermétallique (9), la couche d'alliage métallique (11) étant une couche d'aluminium, une couche d'alliage d'aluminium ou une couche d'alliage à base d'aluminium, la composition de l'acier du substrat (3) étant choisie parmi les compositions suivantes :

l'acier du substrat (3) comprend, en poids :

$$0,10 \% \leq C \leq 0,5 \%$$

$$0,5 \% \leq Mn \leq 4,5 \%$$

$$0,1 \% \leq Si \leq 1 \%$$

$$0,01 \% \leq Cr \leq 1 \%$$

41

$$Ti \leq 0,2 \%$$

$$Al \leq 0,1 \%$$

$$S \leq 0,05 \%$$

$$P \leq 0,1 \%$$

$$B \leq 0,010 \%$$

le reste étant constitué de fer et d'impuretés résultant de la fabrication,
ou
l'acier du substrat (3) comprend, en poids :

$$0,040 \% \leq C \leq 0,100 \%$$

$$0,80 \% \leq Mn \leq 2,00 \%$$

$$Si \leq 0,30 \%$$

$$S \leq 0,005 \%$$

$$P \leq 0,030 \%$$

$$0,010 \% \leq Al \leq 0,070 \%$$

$$0,015 \% \leq Nb \leq 0,100 \%$$

$$Ti \leq 0,080 \%$$

$$N \leq 0,009 \%$$

$$Cu \leq 0,100 \%$$

$$Ni \leq 0,100 \%$$

$$Cr \leq 0,100 \%$$

$$Mo \leq 0,100 \%$$

$$Ca \leq 0,006 \%,$$

le reste étant constitué de fer et d'impuretés résultant de la fabrication, ou
l'acier du substrat (3) comprend, en poids :

$$0,24 \% \leq C \leq 0,38 \%$$

$$0,40 \% \leq Mn \leq 3 \%$$

$$0,10\ \% \leq Si \leq 0,70\ \%$$

$$0,015\ \% \leq Al \leq 0,070\ \%$$

$$0\ \% \leq Cr \leq 2\ \%$$

$$0,25\ \% \leq Ni \leq 2\ \%$$

$$0,015\ \% \leq Ti \leq 0,10\ \%$$

$$0\ \% \leq Nb \leq 0,060\ \%$$

$$0,0005\ \% \leq B \leq 0,0040\ \%$$

$$0,003\ \% \leq N \leq 0,010\ \%$$

$$0,0001\ \% \leq S \leq 0,005\ \%$$

$$0,0001\ \% \leq P \leq 0,025\ \%$$

dans lequel les teneurs en titane et en azote satisfont à la relation suivante :

$$Ti/N \geq 3,42$$

et les teneurs en carbone, manganèse, chrome et silicium satisfont à la relation suivante :

$$2,6C + \frac{Mn}{5,3} + \frac{Cr}{13} + \frac{Si}{15} \geq 1,1\ \%,$$

l'acier comprenant facultativement un ou plusieurs des éléments suivants :

$$0,05\ \% \leq Mo \leq 0,65\ \%$$

$$0,001\ \% \leq W \leq 0,30\ \%$$

$$0,0005\ \% \leq Ca \leq 0,005\ \%$$

le reste étant constitué de fer et d'impuretés résultant inévitablement de la fabrication,
chaque tôle pré-revêtue (2) comprenant, sur chaque face principale (4) de celle-ci, au niveau d'un bord de soudure (14) destiné à être incorporé au moins partiellement dans le joint de soudure (22), une zone de retrait (18) dans laquelle le pré-revêtement (5) a été retiré sur une fraction de retrait (F) comprise entre 30 % et 100 % de l'épaisseur du pré-revêtement (5),

- le soudage bout à bout des tôles pré-revêtues (2) à l'aide d'un fil d'apport (20) de manière à créer un joint de soudure (22) à la jonction entre les tôles pré-revêtues (2), le joint de soudure (22) ayant une teneur moyenne en aluminium ($Al_{WJ}$) comprise entre 0,1 % en poids et 1,2 % en poids, l'étape de soudage étant réalisée à l'aide d'un faisceau laser, **caractérisé en ce que** :
- le fil d'apport (20) a la composition suivante, en poids :

$$0,01\ \% \leq C \leq 0,45\ \%$$

$$0{,}001\ \% \leq Mn \leq 0{,}45\ \%$$

$$0{,}001\ \% \leq Si \leq 1\ \%$$

$$0{,}02\ \% \leq Ni \leq 56\ \%$$

$$0{,}001\ \% \leq Cr \leq 30\ \%$$

$$0{,}001\ \% \leq Mo \leq 5\ \%$$

$$0{,}001\ \% \leq Al \leq 0{,}30\ \%$$

$$0{,}001\ \% \leq Cu \leq 1{,}80\ \%$$

$$0{,}001\% \leq Nb \leq 1{,}50\%$$

$$0{,}001\ \% \leq Ti \leq 0{,}30\ \%$$

$$0{,}001\ \% \leq N \leq 10\ \%$$

$$0{,}001\ \% \leq V \leq 0{,}1\ \%$$

$$0{,}001\ \% \leq Co \leq 0{,}20\ \%$$

le reste étant constitué de fer et d'impuretés inévitables, et
- la composition du fil d'apport (20) et la proportion de fil d'apport (20) ajouté au bain de soudure sont choisies de sorte que le joint de soudure (22) ainsi obtenu soit **caractérisé par** :

   (a) un facteur de trempe $FT_{WJ}$ du joint de soudure (22) tel que $FT_{WJ}\ \text{-0,96}\ FT_{BM} \geq 0$ (critère C1), où :

   - $FT_{BM}$ est le facteur de trempe du substrat d'acier (3) le moins durcissable parmi les substrats d'acier (3) des deux tôles pré-revêtues (2), et
   - les facteurs de trempe $FT_{WJ}$ et $FT_{BM}$ sont déterminés à l'aide de la formule suivante : $FT = 128 + 1553 \times C + 55 \times Mn + 267 \times Si + 49 \times Ni + 5 \times Cr - 79 \times Al - 2 \times Ni^2 - 1532 \times C^2 - 5 \times Mn^2 - 127 \times Si^2 - 40 \times C \times Ni - 4 \times Ni \times Mn$, où Al, Cr, Ni, C, Mn et Si sont, respectivement, les teneurs moyennes en aluminium, chrome, nickel, carbone, manganèse et silicium, exprimées en pourcentage en poids, de la zone dont le facteur de trempe doit être déterminé, cette zone étant le joint de soudure (22) dans le cas de $FT_{WJ}$ et le substrat le moins durcissable dans le cas de $FT_{BM}$,

   (b) une teneur moyenne en nickel ($Ni_{WJ}$) du joint de soudure (22) satisfaisant à la relation suivante : $Ni_{WJ} \leq 14\text{-}3{,}4 \times Al_{WJ}$, où $Al_{WJ}$ est la teneur moyenne en aluminium du joint de soudure (22) (critère C2) ; et
   (c) une teneur moyenne en chrome ($Cr_{WJ}$) du joint de soudure (22) satisfaisant à la relation suivante : $Cr_{WJ}$ s $5\text{-}2 \times Al_{WJ}$, où $Al_{WJ}$ est la teneur moyenne en aluminium du joint de soudure (22) (critère C3).

**2.** Procédé selon la revendication 1, dans lequel la teneur moyenne en aluminium ($Al_{WJ}$) du joint de soudure (22) est supérieure ou égale à 0,15 % en poids.

**3.** Procédé selon la revendication 1 ou la revendication 2, dans lequel la teneur moyenne en aluminium ($Al_{WJ}$) du joint de soudure (22) est inférieure ou égale à 0,8 % en poids.

**4.** Procédé selon l'une quelconque des revendications 1 à 3, dans lequel la teneur moyenne en nickel ($Ni_{WJ}$) du joint de soudure (22) est comprise entre 0,1 % en poids et 13,6 % en poids.

5. Procédé selon l'une quelconque des revendications 1 à 4, dans lequel la teneur moyenne en nickel ($Ni_{WJ}$) du joint de soudure (22) est comprise entre 0,2 % en poids et 12,0 % en poids.

6. Procédé selon l'une quelconque des revendications précédentes, dans lequel l'ébauche en acier soudé est telle que, après formage par pressage à chaud et refroidissement :

   - l'énergie Charpy du joint de soudure (22) à 20° C est supérieure ou égale à 25 J/cm$^2$ ; et
   - la résistance ultime à la traction de l'ébauche en acier soudé en acier formée par pressage à chaud et refroidie est supérieure ou égale à la résistance ultime à la traction du substrat le plus faible parmi les substrats (3) des tôles pré-revêtues (2), le substrat le plus faible (3) étant le substrat (3) pour lequel le produit de l'épaisseur par la résistance ultime à la traction après formage par pressage à chaud et refroidissement est le plus faible.

7. Procédé selon l'une quelconque des revendications 1 à 6, dans lequel, pour au moins une tôle pré-revêtue (2), et par exemple pour les deux tôles pré-revêtues (2), la fraction de retrait (F) est strictement inférieure à 100 % de l'épaisseur du pré-revêtement (5).

8. Procédé selon la revendication 7, dans lequel, pour au moins une tôle pré-revêtue (2), le pré-revêtement (5) comprend une couche d'alliage métallique (11) s'étendant sur la couche d'alliage intermétallique (9), la couche d'alliage métallique (11) étant une couche d'aluminium, une couche d'alliage d'aluminium ou une couche d'alliage à base d'aluminium et dans lequel, pour au moins une tôle pré-revêtue (2), et par exemple pour les deux tôles pré-revêtues (2), la couche d'alliage métallique (11) a été retirée sur toute son épaisseur, tandis que la couche d'alliage intermétallique (9) reste entière dans la zone de retrait (18) sur chaque face principale (4) de la tôle pré-revêtue (2).

9. Procédé selon l'une quelconque des revendications 1 à 6, dans lequel, pour au moins une tôle pré-revêtue (2) fournie à l'étape de fourniture, et par exemple pour les deux tôles pré-revêtues (2), dans la zone de retrait (18) sur chaque face principale (4) de la tôle pré-revêtue (2), la fraction de retrait est égale à 100 % de sorte que le pré-revêtement (5) a été retiré sur toute son épaisseur.

10. Procédé selon l'une quelconque des revendications précédentes, comprenant, préalablement à l'étape de fourniture, une étape de production des deux tôles pré-revêtues (2) à partir de tôles pré-revêtues initiales (2') respectives, cette étape comprenant une sous-étape d'obtention de la zone de retrait (18) sur chaque face principale (4) de chaque tôle pré-revêtue (2) par retrait du pré-revêtement (5) sur une fraction de retrait (F) comprise entre 30 % et 100 % de l'épaisseur du pré-revêtement (5) par ablation laser au niveau du bord de soudure (14) de la tôle pré-revêtue (2).

11. Procédé selon la revendication 10, dans lequel l'étape de production des deux tôles pré-revêtues (2) comprend :

    - la fourniture de deux tôles pré-revêtues initiales (2'),
    - l'agencement de ces deux tôles pré-revêtues initiales (2') l'une à côté de l'autre en laissant un espace prédéterminé entre elles ; et
    - le retrait simultané, par ablation laser, du pré-revêtement (5) sur les deux tôles pré-revêtues initiales (2') adjacentes de manière à créer simultanément la zone de retrait (18) sur les faces adjacentes de ces deux tôles pré-revêtues initiales (2'), le faisceau laser chevauchant les deux tôles pré-revêtues initiales (2') adjacentes lors de l'étape de retrait.

12. Procédé selon l'une quelconque des revendications précédentes, comprenant en outre, avant le soudage bout à bout, la préparation du bord de soudure (14) d'au moins une des tôles pré-revêtues (2), à l'aide d'au moins une des étapes de traitement suivantes : brossage, usinage, chanfreinage et/ou biseautage.

13. Procédé selon l'une quelconque des revendications précédentes, dans lequel, pour au moins une des tôles pré-revêtues (2), l'acier du substrat (3) comprend, en poids :

$$0{,}15 \ \% \leq C \leq 0{,}25 \ \%$$

$$0{,}8 \ \% \leq Mn \leq 1{,}8 \ \%$$

$$0,1\ \% \leq Si \leq 0,35\ \%$$

$$0,01\ \% \leq Cr \leq 0,5\ \%$$

$$Ti \leq 0,1\ \%$$

$$Al \leq 0,1\ \%$$

$$S \leq 0,05\ \%$$

$$P \leq 0,1\ \%$$

$$B \leq 0,005\ \%$$

le reste étant constitué de fer et d'impuretés résultant de la fabrication.

14. Procédé selon l'une quelconque des revendications précédentes, dans lequel le soudage est effectué à l'aide d'un gaz de protection, notamment de l'hélium et/ou de l'argon.

15. Procédé de production d'une pièce d'acier soudée, puis formée par pressage à chaud et refroidie, **caractérisé en ce que** le procédé comprend les étapes successives de :

- réalisation du procédé selon l'une quelconque des revendications 1 à 14 afin d'obtenir une ébauche en acier soudé (1) ;
- chauffage de l'ébauche en acier soudé (1) de manière à obtenir une structure entièrement austénitique dans les substrats (3) des tôles pré-revêtues (2) ;
- formage par pressage à chaud de l'ébauche en acier soudé (1) dans un outil de presse pour obtenir une pièce en acier ; et
- refroidissement de la pièce en acier dans l'outil de presse.

16. Procédé selon la revendication 15, dans lequel, lors de l'étape de refroidissement, la vitesse de refroidissement est supérieure ou égale à la vitesse de refroidissement bainitique ou martensitique du plus durcissable des substrats (3) des tôles pré-revêtues (2).

17. Ébauche en acier soudé (1) comprenant deux tôles pré-revêtues (2), chaque tôle pré-revêtue (2) comprenant un substrat en acier (3) ayant un pré-revêtement (5) sur chacune de ses faces principales (4), le pré-revêtement (5) comprenant une couche d'alliage intermétallique (9) comprenant au moins du fer et de l'aluminium et, facultativement, une couche d'alliage métallique (11) s'étendant sur la couche d'alliage intermétallique (9), la couche d'alliage métallique (11) étant une couche d'aluminium, une couche d'alliage d'aluminium ou une couche d'alliage à base d'aluminium,
la composition de l'acier du substrat (3) étant choisie parmi les compositions suivantes :

l'acier du substrat (3) comprend, en poids :

$$0,10\ \% \leq C \leq 0,5\ \%$$

$$0,5\ \% \leq Mn \leq 4,5\ \%$$

$$0,1\ \% \leq Si \leq 1\ \%$$

$$0,01\ \% \leq Cr \leq 1\ \%$$

$$Ti \leq 0,2\ \%$$

$$Al \leq 0,1\ \%$$

$$S \leq 0,05\ \%$$

$$P \leq 0,1\ \%$$

$$B \leq 0,010\ \%$$

le reste étant constitué de fer et d'impuretés résultant de la fabrication,
ou
l'acier du substrat (3) comprend, en poids :

$$0,040\% \leq C \leq 0,100\ \%$$

$$0,80\ \% \leq Mn \leq 2,00\ \%$$

$$Si \leq 0,30\ \%$$

$$S \leq 0,005\ \%$$

$$P \leq 0,030\ \%$$

$$0,010\ \% \leq Al \leq 0,070\ \%$$

$$0,015\ \% \leq Nb \leq 0,100\ \%$$

$$Ti \leq 0,080\ \%$$

$$N \leq 0,009\ \%$$

$$Cu \leq 0,100\ \%$$

$$Ni \leq 0,100\ \%$$

$$Cr \leq 0,100\ \%$$

$$Mo \leq 0,100\ \%$$

$$Ca \leq 0,006\ \%,$$

le reste étant constitué de fer et d'impuretés résultant de la fabrication,
ou
l'acier du substrat (3) comprend, en poids :

$$0,24\ \% \leq C \leq 0,38\ \%$$

$$0,40 \% \leq Mn \leq 3 \%$$

$$0,10 \% \leq Si \leq 0,70 \%$$

$$0,015 \% \leq Al \leq 0,070 \%$$

$$0 \% \leq Cr \leq 2 \%$$

$$0,25 \% \leq Ni \leq 2 \%$$

$$0,015 \% \leq Ti \leq 0,10 \%$$

$$0 \% \leq Nb \leq 0,060 \%$$

$$0,0005 \% \leq B \leq 0,0040 \%$$

$$0,003 \% \leq N \leq 0,010 \%$$

$$0,0001 \% \leq S \leq 0,005 \%$$

$$0,0001 \% \leq P \leq 0,025 \%$$

dans lequel les teneurs en titane et en azote satisfont à la relation suivante :

$$Ti/N \geq 3,42$$

et les teneurs en carbone, manganèse, chrome et silicium satisfont à la relation suivante :

$$2,6C + \frac{Mn}{5,3} + \frac{Cr}{13} + \frac{Si}{15} \geq 1,1 \%,$$

l'acier comprenant facultativement un ou plusieurs des éléments suivants :

$$0,05 \% \leq Mo \leq 0,65 \%$$

$$0,001 \% \leq W \leq 0,30 \%$$

$$0,0005 \% \leq Ca \leq 0,005 \%$$

le reste étant constitué de fer et d'impuretés résultant inévitablement de la fabrication,
les tôles pré-revêtues (2) sont assemblées par un joint de soudure (22), le joint de soudure (22) ayant une teneur moyenne en aluminium ($Al_{WJ}$) comprise entre 0,1 % en poids et 1,2 % en poids, le joint de soudure (22) étant obtenu à l'aide d'un faisceau laser, et le joint de soudure (22) étant en outre **caractérisé par** :

(a) un facteur de trempe $FT_{WJ}$ du joint de soudure (22) tel que *$FT_{WJ}$ -0,96 $FT_{BM}$ $\geq$0* (critère C1),
où :

- $FT_{BM}$ est le facteur de trempe du substrat d'acier (3) le moins durcissable parmi les substrats d'acier (3) des deux tôles pré-revêtues (2), et
- les facteurs de trempe $FT_{WJ}$ et $FT_{BM}$ sont déterminés à l'aide de la formule suivante : $FT=128 + 1553xC + 55xMn + 267xSi + 49xNi + 5xCr - 79xAl - 2xNi^2 - 1532xC^2 - 5xMn^2 - 127xSi^2 - 40xCxNi - 4xNixMn$, où Al,

Cr, Ni, C, Mn et Si sont, respectivement, les teneurs moyennes en aluminium, chrome, nickel, carbone, manganèse et silicium, exprimées en pourcentage en poids, de la zone dont le facteur de trempe doit être déterminé, cette zone étant le joint de soudure (22) dans le cas de $FT_{WJ}$ et le substrat le moins durcissable dans le cas de $FT_{BM}$,

(b) une teneur moyenne en nickel ($Ni_{WJ}$) du joint de soudure (22) satisfaisant à la relation suivante : $Ni_{WJ} \leq 14\text{-}3,4x\ Al_{WJ}$, où $Al_{WJ}$ est la teneur moyenne en aluminium du joint de soudure (22) (critère C2) ; et
(c) une teneur moyenne en chrome ($Cr_{WJ}$) du joint de soudure (22) satisfaisant à la relation suivante : $Cr_{WJ} \leq 5\text{-}2x\ Al_{WJ}$, où $Al_{WJ}$ la teneur moyenne en aluminium du joint de soudure (22) (critère C3), et

chaque tôle pré-revêtue (2) comprenant, sur chaque face principale (4) de celle-ci, adjacente au joint de soudure (22), une zone intermédiaire (28) dans laquelle le pré-revêtement (5) a été retiré sur une fraction de retrait (F) comprise entre 30 % et 100 % de l'épaisseur du pré-revêtement (5).

18. Ébauche en acier soudé (1) selon la revendication 17, dans lequel, pour chaque tôle pré-revêtue (2), la largeur de la zone intermédiaire (28) est comprise entre 5 $\mu$m et 2000 $\mu$m à partir du bord du joint de soudure (22).

19. Ébauche en acier soudé (1) selon l'une des revendications 17 ou 18, dans lequel, pour au moins une tôle pré-revêtue (2), et par exemple pour les deux tôles pré-revêtues (2), la fraction de retrait (F) est égale à 100 % de l'épaisseur du pré-revêtement (5).

20. Ébauche en acier soudé (1) selon l'une quelconque des revendications 17 à 19, dans lequel, pour au moins une tôle pré-revêtue (2), et par exemple pour les deux tôles pré-revêtues (2), la fraction de retrait (F) est strictement inférieure à 100 % de l'épaisseur du pré-revêtement (5).

21. Ébauche en acier soudé (1) selon la revendication 20, dans lequel, pour au moins une tôle pré-revêtue (2), et par exemple pour les deux tôles pré-revêtues (2), le pré-revêtement (5) comprend une couche d'alliage métallique (11) s'étendant sur la couche d'alliage intermétallique (9), la couche d'alliage métallique (11) étant une couche d'aluminium, une couche d'alliage d'aluminium ou une couche d'alliage à base d'aluminium et dans lequel, pour au moins une tôle pré-revêtue (2), et par exemple pour les deux tôles pré-revêtues (2), la couche d'alliage métallique (11) a été retirée sur toute son épaisseur, tandis que la couche d'alliage intermétallique (9) reste entière dans la zone de retrait (18) sur chaque face principale (4) de la tôle pré-revêtue (2).

22. Ébauche en acier soudé (1) selon l'une quelconque des revendications 17 à 21, dans lequel la teneur en nickel ($Ni_{WJ}$) du joint de soudure (22) est comprise entre 0,1 % en poids et 13,6 % en poids, et plus particulièrement entre 0,2 % en poids et 12,0 % en poids.

23. Ébauche en acier soudé (1) selon l'une quelconque des revendications 17 à 22, dans lequel l'ébauche en acier soudé (1) est telle que, après formage par pressage à chaud et refroidissement :

- l'énergie Charpy du joint de soudure (22) à 20° C est supérieure ou égale à 25 J/cm$^2$ ; et
- la résistance ultime à la traction de l'ébauche en acier soudé en acier formée par pressage à chaud et refroidie est supérieure ou égale à la résistance ultime à la traction du substrat le plus faible parmi les substrats (3) des tôles pré-revêtues (2), le substrat le plus faible (3) étant le substrat pour lequel le produit de l'épaisseur par la résistance ultime à la traction après formage par pressage à chaud et refroidissement est le plus faible.

24. Ébauche en acier soudé (1) selon l'une quelconque des revendications 17 à 23, dans lequel le joint de soudure (22) est tel que, après formage par pressage à chaud et refroidissement, la variation maximale de dureté $\Delta HV(WJ)$ à travers le joint de soudure (22) est inférieure ou égale à 20 % de la dureté moyenne $HV_{moyenne}(WJ)$ du joint de soudure (22).

25. Ébauche en acier soudé (1) selon l'une quelconque des revendications 17 à 24, dans lequel chaque zone intermédiaire (28) comporte des stries de solidification, les stries de solidification sur les faces principales (4) adjacentes des deux tôles pré-revêtues (2) étant symétriques par rapport à un plan vertical médian (M) entre les deux tôles pré-revêtues (2).

26. Ébauche en acier soudé (1) selon l'une quelconque des revendications 17 à 25, dans lequel chaque zone intermédiaire (28) comprend un bord intérieur (30), situé au niveau du joint de soudure (22), et un bord extérieur (32), situé à distance du joint de soudure (22), et dans lequel la distance entre les bords extérieurs (32) des zones intermédiaires (28) adjacentes des deux tôles pré-revêtues (2) est constante le long de la direction longitudinale du joint de soudure (22).

27. Pièce en acier soudé, formée par pressage à chaud et refroidie comprenant une première pièce en acier revêtue et une seconde pièce en acier revêtue, chaque pièce en acier revêtue comprenant un substrat en acier (3) ayant, sur au moins une de ses faces principales, un revêtement comprenant au moins du fer et de l'aluminium, la composition de l'acier du substrat (3) étant choisie parmi les compositions suivantes :

l'acier du substrat (3) comprend, en poids :

$$0{,}10\ \% \leq C \leq 0{,}5\ \%$$

$$0{,}5\ \% \leq Mn \leq 4{,}5\ \%$$

$$0{,}1\ \% \leq Si \leq 1\ \%$$

$$0{,}01\ \% \leq Cr \leq 1\ \%$$

$$Ti \leq 0{,}2\ \%$$

$$Al \leq 0{,}1\ \%$$

$$S \leq 0{,}05\ \%$$

$$P \leq 0{,}1\ \%$$

$$B \leq 0{,}010\ \%$$

le reste étant constitué de fer et d'impuretés résultant de la fabrication,
ou
l'acier du substrat (3) comprend, en poids :

$$0{,}040\ \% \leq C \leq 0{,}100\ \%$$

$$0{,}80\ \% \leq Mn \leq 2{,}00\ \%$$

$$Si \leq 0{,}30\ \%$$

$$S \leq 0{,}005\ \%$$

$$P \leq 0{,}030\ \%$$

$$0{,}010\ \% \leq Al \leq 0{,}070\ \%$$

$$0{,}015\ \% \leq Nb \leq 0{,}100\ \%$$

$$Ti \leq 0{,}080\ \%$$

$$N \leq 0{,}009\ \%$$

**EP 3 902 651 B1**

$$Cu \leq 0,100\ \%$$

$$Ni \leq 0,100\ \%$$

$$Cr \leq 0,100\ \%$$

$$Mo \leq 0,100\ \%$$

$$Ca \leq 0,006\ \%,$$

le reste étant constitué de fer et d'impuretés résultant de la fabrication,
ou
l'acier du substrat (3) comprend, en poids :

$$0,24\ \% \leq C \leq 0,38\ \%$$

$$0,40\ \% \leq Mn \leq 3\ \%$$

$$0,10\ \% \leq Si \leq 0,70\ \%$$

$$0,015\ \% \leq Al \leq 0,070\ \%$$

$$0\ \% \leq Cr \leq 2\ \%$$

$$0,25\ \% \leq Ni \leq 2\ \%$$

$$0,015\ \% \leq Ti \leq 0,10\ \%$$

$$0\ \% \leq Nb \leq 0,060\ \%$$

$$0,0005\ \% \leq B \leq 0,0040\ \%$$

$$0,003\ \% \leq N \leq 0,010\ \%$$

$$0,0001\ \% \leq S \leq 0,005\ \%$$

$$0,0001\ \% \leq P \leq 0,025\ \%$$

dans lequel les teneurs en titane et en azote satisfont à la relation suivante :

$$Ti/N \geq 3,42$$

et les teneurs en carbone, manganèse, chrome et silicium satisfont à la relation suivante :

$$2,6C + \frac{Mn}{5,3} + \frac{Cr}{13} + \frac{Si}{15} \geq 1,1\ \%,$$

l'acier comprenant facultativement un ou plusieurs des éléments suivants :

$$0{,}05\ \% \le Mo \le 0{,}65\ \%$$

$$0{,}001\ \% \le W \le 0{,}30\ \%$$

$$0{,}0005\ \% \le Ca \le 0{,}005\ \%$$

le reste étant constitué de fer et d'impuretés résultant inévitablement de la fabrication,
la première et la seconde pièce en acier revêtu étant assemblées par un joint de soudure (22), le joint de soudure (22) ayant une teneur moyenne en aluminium ($Al_{WJ}$) comprise entre 0,1 % en poids et 1,2 % en poids, le joint de soudure (22) étant obtenu à l'aide d'un faisceau laser, et le joint de soudure (22) étant en outre **caractérisé par** :

(a) un facteur de trempe $FT_{WJ}$ du joint de soudure (22) tel que $FT_{WJ}$ *-0,96 $FT_{BM}$* $\ge 0$ (critère C1), où :

- $FT_{BM}$ est le facteur de trempe du substrat d'acier (3) le moins durcissable parmi les substrats d'acier (3) de la première et la seconde pièce en acier, et
- les facteurs de trempe $FT_{WJ}$ et $FT_{BM}$ sont déterminés à l'aide de la formule suivante : $FT = 128 + 1553 \times C + 55 \times Mn + 267 \times Si + 49 \times Ni + 5 \times Cr - 79 \times Al - 2 \times Ni^2 - 1532 \times C^2 - 5 \times Mn^2 - 127 \times Si^2 - 40 \times C \times Ni - 4 \times Ni \times Mn$, où Al, Cr, Ni, C, Mn et Si sont, respectivement, les teneurs moyennes en aluminium, chrome, nickel, carbone, manganèse et silicium, exprimées en pourcentage en poids, de la zone dont le facteur de trempe doit être déterminé, cette zone étant le joint de soudure (22) dans le cas de $FT_{WJ}$ et le substrat le moins durcissable dans le cas de $FT_{BM}$,

(b) une teneur moyenne en nickel ($Ni_{WJ}$) du joint de soudure (22) satisfaisant à la relation suivante : $Ni_{WJ} \le 14 - 3{,}4 \times Al_{WJ}$, où $Al_{WJ}$ est la teneur moyenne en aluminium du joint de soudure (22) (critère C2) ; et
(c) une teneur moyenne en chrome ($Cr_{WJ}$) du joint de soudure (22) satisfaisant à la relation suivante : $Cr_{WJ} \le 5 - 2 \times Al_{WJ}$, où $Al_{WJ}$ la teneur moyenne en aluminium du joint de soudure (22) (critère C3), et

chaque partie de pièce en acier revêtu comprenant, sur chaque face principale de celle-ci, adjacente au joint de soudure (22), une zone intermédiaire (28) dans laquelle l'épaisseur du revêtement est strictement inférieure à celle des zones adjacentes de la partie de pièce en acier revêtu situées à une distance plus grande du joint de soudure (22) que la zone intermédiaire ou dans laquelle le revêtement est absent.

28. Pièce d'acier soudée, formée par pressage à chaud et refroidie selon la revendication 27, dans laquelle chaque zone intermédiaire comprend des stries de solidification, les stries de solidification sur les faces principales (4) adjacentes des deux parties de pièce d'acier revêtu étant symétriques par rapport à un plan médian vertical entre les deux parties de pièce d'acier revêtu.

29. Pièce d'acier soudée, formée par pressage à chaud et refroidie selon l'une quelconque des revendications 27 ou 28, dans laquelle chaque zone intermédiaire comprend un bord intérieur, situé au niveau du joint de soudure (22) et un bord extérieur, situé à distance du joint de soudure (22) et dans laquelle la distance entre les bords extérieurs des zones intermédiaires adjacentes des deux parties de pièce en acier revêtu est constante le long de la direction longitudinale du joint de soudure (22).

30. Pièce en acier soudée, formée par pressage à chaud et refroidie selon l'une quelconque des revendications 27 à 29, dans laquelle la dureté moyenne $HV_{moyenne}(WJ)$ dans le joint de soudure (22) est inférieure ou égale à 700 HV.

31. Pièce en acier soudée, formée par pressage à chaud et refroidie selon l'une quelconque des revendications 27 à 30, dans laquelle la teneur moyenne en nickel ($Ni_{WJ}$) du joint de soudure (22) est comprise entre 0,1 % en poids et 13,6 % en poids, et plus particulièrement entre 0,2 % en poids et 12,0 % en poids.

32. Pièce en acier soudée, formée par pressage à chaud et refroidie selon l'une quelconque des revendications 27 à 31, dans laquelle :

- l'énergie Charpy du joint de soudure (22) à 20° C est supérieure ou égale à 25 J/cm² ; et
- la résistance ultime à la traction de la pièce en acier soudée, formée par pressage à chaud et refroidie est supérieure ou égale à la résistance ultime à la traction du substrat le plus faible parmi les substrats (3) des parties de pièce en acier revêtu, le substrat le plus faible (3) étant le substrat pour lequel le produit de l'épaisseur par la résistance ultime à la traction est le plus faible.

33. Pièce en acier soudée, formée par pressage à chaud et refroidie selon l'une quelconque des revendications 27 à 32, dans laquelle la variation maximale de dureté $\Delta HV(WJ)$ à travers le joint de soudure (22) est inférieure ou égale à 20 % de la dureté moyenne $HV_{moyenne}(WJ)$ du joint de soudure (22).

34. Pièce en acier soudée, formée par pressage à chaud et refroidie selon l'une quelconque des revendications 27 à 33, dans laquelle l'acier du substrat (3) d'au moins une de la première et de la seconde partie de pièce en acier revêtu comprend, en poids :

$$0,15\ \% \le C \le 0,25\ \%$$

$$0,8\ \% \le Mn \le 1,8\ \%$$

$$0,1\ \% \le Si \le 0,35\ \%$$

$$0,01\ \% \le Cr \le 0,5\ \%$$

$$Ti \le 0,1\ \%$$

$$Al \le 0,1\ \%$$

$$S \le 0,05\ \%$$

$$P \le 0,1\ \%$$

$$B \le 0,005\ \%$$

le reste étant constitué de fer et d'impuretés résultant de la fabrication.

35. Utilisation d'une pièce en acier soudée, formée par pressage à chaud et refroidie selon l'une quelconque des revendications 27 à 34 pour la production d'une pièce anti-intrusion ou d'une pièce d'absorption d'énergie pour véhicule automobile.

Fig.1

Fig.2

*Fig.3*

*Fig.4*

*Fig.5*

**REFERENCES CITED IN THE DESCRIPTION**

**Patent documents cited in the description**

- EP 2007545 A
- EP 2737971 A
- US 20160144456 A
- WO 2014075824 A
- WO 2015086781 A
- EP 2942143 A
- US 2014003860 A1
- WO 2007118939 A